# EUROPEAN PATENT APPLICATION

(11) **EP 4 016 994 A1**
(43) Date of publication of application: **22.06.2022**
(21) Application number: 20870699.4
(22) Date of filing: 23.09.2020
(51) Int. Cl.: H04N 5/783, H04N 21/235, H04N 21/435, H04N 21/462

(54) **INFORMATION PROCESSING DEVICE AND INFORMATION PROCESSING METHOD**

(30) Priority: 01.10.2019 JP 2019181750
(71) Applicant: Sony Group Corporation, Tokyo 108-0075 (JP)
(72) Inventor: KIYAMA, Yuka, Tokyo 108-0075 (JP); TAKAHASHI, Ryohei, Tokyo 108-0075 (JP); HIRABAYASHI, Mitsuhiro, Tokyo 108-0075 (JP); KUNO, Hiroshi, Tokyo 108-0075 (JP)
(74) Representative: D Young & Co LLP
(86) International application number: PCT/JP2020/035747
(87) International publication number: WO 2021/065605

(57) **Abstract**

Provided is an appropriate viewing experience according to the intention of a provider. A metadata generation unit (122) generates timed playback information indicating a display order along time passage for playback of each scene of 6DoF content including a three-dimensional model in a three-dimensional space, and modified timed metadata including recommended viewing information indicating a viewpoint position and a line-of-sight direction at each time point along time passage for playback, and generates association information indicating that the timed playback information and the modified timed metadata correspond to each time point along the time passage for playback.

## Description

### Field

The present invention relates to an information processing device and an information processing method.

### Background

In the current video streaming, two-dimensional content called two-dimensional video, used for movie streaming and the like, is mainly distributed. In addition, distribution of content called 360-degree video that provides a view in all directions is also provided on various sites on the Internet. The 360-degree video is also called three degrees of freedom (3DoF) video. In both of the two-dimensional video and the 3DoF video, two-dimensionally encoded content is basically distributed and displayed on a client device.

Meanwhile, as video with a further degree of freedom, distribution of 6DoF content including a three-dimensional model in a three-dimensional space has been proposed. Hereinafter, the three-dimensional model is referred to as a 3D model. In the 6DoF content, the user is allowed to freely select a line-of-sight direction in the three-dimensional space, having a view in all directions. Furthermore, the user can freely select a viewpoint position to view the 6DoF content from a free viewpoint position in the space. In other words, the 6DoF content provides a video where the user can view various video scenes freely in any viewpoint direction and from any viewpoint position. The 6DoF content includes data of one or more three-dimensional models in the three-dimensional space. Hereinafter, data about each 3D model will be referred to as 3D model data.

Note that here, the video to be displayed by playing back the 6DoF content on a playback terminal is referred to as 6DoF video. Meanwhile, due to the degree of freedom of the 6DoF video, the user may miss a scene that the user should pay attention to. Therefore, in the distribution of the 6DoF content, viewport information indicating the line-of-sight direction and the viewpoint position that show the scene that the user should pay attention to is provided to the user. The user is allowed to view the scene that the user should pay attention to of the 6DoF video on the basis of this viewport information.

Furthermore, for video viewing according to the intention of a video creator, timed playback information can also be provided that notifies of a recommended timed playback method, such as pausing, slow-motion playback, and loop playback.

Here, the original data of a video to be viewed is called media data. Furthermore, the time axis of the media data is called a media timeline. The media data includes a sample that is arranged along the media timeline and forms a bit stream. The sample is the smallest unit of the bit stream. Each sample is assigned with a component time stamp (CTS) according to the media timeline.

### Citation List

### Non Patent Literature

Non Patent Literature 1: "ISO/IEC 14496-12", Fifth Edition, 2015-12-15

### Summary

### Technical Problem

However, the current method for timed playback control that is defined in ISOBMFF does not assume spatial playback control based on viewing of the 6DoF content freely in any viewpoint direction and from any viewpoint position. For example, in a case where the video of the 6DoF content is paused, the line-of-sight direction and the viewpoint position with respect to the paused 6DoF content cannot be changed according to the intention of the provider, providing no appropriate visual experience.

Therefore, the present disclosure proposes an information processing device and an information processing method that provide an appropriate viewing experience according to the intention of a provider.

### Solution to Problem

To solve the problems described above, an information processing device according to an embodiment of the present disclosure includes a metadata generation unit that generates timed playback information indicating a display order along time passage for playback of each scene of 6DoF content including a three-dimensional model in a three-dimensional space, and modified timed metadata including recommended viewing information indicating a viewpoint position and a line-of-sight direction corresponding to each time point along time passage for playback, and generates association information indicating that the timed playback information and the modified timed metadata correspond to each time point along the time passage for playback.

### Brief Description of Drawings

FIG. 1 is a diagram illustrating data reproduction using EditList.
FIG. 2 is a system configuration diagram illustrating an example of a distribution system.
FIG. 3 is a block diagram of a file generation device.
FIG. 4 is a diagram illustrating an example of EditList.
FIG. 5 is a diagram illustrating an example of syntax of modified timed metadata.
FIG. 6 is a diagram illustrating association of recommended viewport information with Editlist.
FIG. 7 is a diagram illustrating an ISOBMFF file according to a first embodiment.
FIG. 8 is a block diagram of a client device.
FIG. 9 is a flowchart of a file generation process performed by the file generation device according to the first embodiment.
FIG. 10 is a flowchart of a playback process performed by the client device according to the first embodiment.
FIG. 11 is a diagram illustrating an example of the syntax of a playlist according to Modification (1) of the first embodiment.
FIG. 12 is a diagram illustrating an example of storing the playlist in an ISOBMFF file, according to Modification (1) of the first embodiment.
FIG. 13 is a diagram illustrating a playback state in simultaneous use of the playlist and EditList.
FIG. 14 is a flowchart of a metadata generation process according to Modification (1) of the first embodiment.
FIG. 15 is a flowchart of a metadata analysis process according to Modification (1) of the first embodiment.
FIG. 16 is a diagram illustrating an example of the syntax of Editlist according to a second embodiment.
FIG. 17 is a diagram illustrating an example of EditList having a plurality of types of list information.
FIG. 18 is a diagram illustrating an example of the syntax of modified timed metadata according to the second embodiment.
FIG. 19 is a diagram illustrating an example of storing EditLists in an ISOBMFF file according to the second embodiment.
FIG. 20 is a diagram illustrating an example of storing EditLists in an ISOBMFF file, according to Modification (1) of the second embodiment.
FIG. 21 is a diagram illustrating an example of storing EditLists in an ISOBMFF file according to Modification (2) of the second embodiment.
FIG. 22 is a diagram illustrating an example of storing playlists in an ISOBMFF file according to Modification (1-3) of the second embodiment.
FIG. 23 is a diagram illustrating an example of storing EditList and the playlist that are used simultaneously, in the ISOBMFF file, according to Modification (1-3) of the second embodiment.
FIG. 24 is a diagram illustrating an example of a playlist according to Modification (1-4) of the second exemplary embodiment.
FIG. 25 is a diagram illustrating an example of storing the playlists in an ISOBMFF file according to Modification (1-4) of the second embodiment.
FIG. 26 is a diagram illustrating an example of mixed timed metadata according to Modification (2-1) of the second embodiment.
FIG. 27 is a diagram illustrating an example of storing the mixed timed metadata in an ISOBMFF file according to Modification (2-1) of the second embodiment.
FIG. 28 is a diagram illustrating an outline of specifying timed playback information by using the mixed timed metadata according to Modification (2-1) of the second embodiment.
FIG. 29 is a diagram illustrating an example of mixed timed metadata according to Modification (2-2) of the second embodiment.
FIG. 30 is a diagram illustrating an outline of specifying timed playback information by using mixed timed metadata according to Modification (2-2) of the second embodiment.
FIG. 31 is a diagram illustrating an example of timed metadata for timed playback according to Modification (2-3) of the second embodiment.
FIG. 32 is a diagram illustrating an outline of specifying by using the timed metadata for timed playback according to Modification (6) of the second embodiment.
FIG. 33 is a diagram illustrating an example of storing the timed metadata for timed playback in an ISOBMFF file according to Modification (2-3) of the second embodiment.
FIG. 34 is a diagram illustrating an example of modified timed metadata according to a third embodiment.
FIG. 35 is a diagram illustrating assignment of flick behavior to the modified timed metadata.
FIG. 36 is a diagram illustrating an example of syntax including prediction processing information according to a fourth embodiment.
FIG. 37 is a diagram illustrating an example of a playlist according to the fourth embodiment.
FIG. 38 is a diagram illustrating an example of prediction processing information according to the fourth embodiment.
FIG. 39 is a diagram illustrating an example of a Matroska format.
FIG. 40 is a diagram illustrating a description example of a DASH MPD file according to a sixth embodiment.
FIG. 41 is a hardware configuration diagram of a file generation device.

### Description of Embodiments

Hereinafter, embodiments of an information processing device and an information processing method that are disclosed in the present application will be described in detail with reference to the drawings. Note that the scope of the present technology includes not only the contents described in the embodiments but also the contents described in the following Non Patent Literatures that are known at the time of filing.
Non Patent Literature 1: (described above)
Non Patent Literature 2: "ISO/IEC 14496-11", Second Edition, 2015-11-01
Non Patent Literature 3: "ISO/IEC 23009-1", Third Edition, 2019-08
Non Patent Literature 4: "ISO/IEC 23001-10", First Edition, 2015-09-01
Non Patent Literature 5: Matroska Media Container (https://www.matroska.org/)

In other words, the contents described in the non patent literatures described above also serve as the basis for determining the support requirements. For example, File structure described in Non Patent Literature 1, a structure/terms used for Scene Description described in Non Patent Literature 2, terms used in the MPEG-DASH standard described in Non Patent Literature 3, a structure/terms used for recommended viewport and the like described in Non Patent Literature 4, and a structure/terms used in the Matroska standard described in Non Patent Literature 5, which may not be directly described in the embodiments, are within the scope of the present technology, and meet the support requirements for the scope of claims. Furthermore, for example, technical terms, such as parsing, syntax, semantics, are also within the scope of the present technology, which may not be directly described in the embodiments, meet the support requirements for the scope of claims.

Furthermore, the present disclosure will be described in the order of the items shown below.
1. First Embodiment
1.1 Modification (1) of first embodiment
2. Second Embodiment
2.1-1 Modification (1-1) of Second Embodiment
2.1-2 Modification (1-2) of Second Embodiment
2.1-3 Modification (1-3) of Second Embodiment
2.1-4 Modification (1-4) of Second Embodiment
2.2-1 Modification (2-1) of Second Embodiment
2.2-2 Modification (2-2) of Second Embodiment
2.2-3 Modification (2-3) of Second Embodiment
3. Third Embodiment
4. Fourth Embodiment
5. Fifth Embodiment
6. Sixth Embodiment

### [1. First Embodiment]

As described above, the current content distribution includes two-dimensional video content, 3DoF content, "3DoF+" content, and 6DoF content. The "3DoF+" content is content that can provide a view in all directions as in the 3DoF content, further allowing slight movement of a viewpoint position. For the range of the movement of the viewpoint position, a range in which the head can be moved while sitting is assumed. The "3DoF+" content achieves the movement of the viewpoint position by using one or more two-dimensionally encoded images.

Here, as described above, in the 6DoF content, a scene that the user should pay attention to is missed due to the degree of freedom, in some cases. As a method for solving this problem, it is considered to store information in the content in advance to achieve a viewing experience that a content creator desires to provide to the user. The 6DoF content can provide an experience of viewing a 3D model from any direction, and thus, change of a playback method for a certain scene in recommended viewing can be considered, in addition to storage of a recommended viewport as an existing technology. Here, the change of the playback method means pausing, slow-motion playback, and loop playback. For example, it is possible to provide the recommended viewing, such as providing a view of the 3D model from any direction while the playback of 6DoF video is paused, or providing a different view of the 3D model from any direction each time a loop playback is performed. Such recommended viewing will provide a viewer a more valuable viewing experience in the 6DoF content.

As a method of causing the user to view a scene that the user should pay attention to as described above, for example, there is a method of storing recommended viewport information. The method is defined for the 3DoF content, as the recommended viewport in an omnidirectional media format (OMAF) (ISO/IEC23090-2). The recommended viewport information indicates the recommended viewport for spatial playback control.

The recommended viewport is a technology that provides a video by specifying a viewpoint of interest or region of interest of a multiview video, spherical video, or the like, in the 3DoF content. Therefore, it is possible to dynamically provide a display area for a gaze point, for recommended display such as a director's cut, on a spherical surface.

Meanwhile, the spherical video data, as the 3DoF content, is configured as a bit stream encoded as two-dimensional video data, and the bit stream includes samples arranged according to a decoder time stamp (DTS) indicating the order to be decoded. Therefore, in playback, in ISOBMFF, for example, when such spherical video data is stored in one track, timed metadata indicating the recommended viewport of the video that changes with time is stored in another track. Then, reference relationship information indicating a reference relationship between these two tracks is stored in track reference Box ('tref' BOX). Note that, for example, a method of associating each sample of the spherical video data with each sample of the timed metadata is performed so as to associate a sample of the spherical video data with a sample of the timed metadata having the same CTS as that of a sample of certain video data. Therefore, the sample of the spherical video data specified by the timed metadata based on the CTS corresponds to a display area of the video.

However, in these methods, the content is played back in a media timeline that is the time axis of the content. Therefore, in the recommended viewing of the 6DoF content as described above, the media timeline cannot be temporarily stopped to change the playback method for a certain scene.

Furthermore, an example of a technology for providing a playback timeline that is timed playback information indicating a recommended playback method in a certain scene on a time axis different from the media timeline described above includes a method using EditList function (hereinafter referred to as EditList) defined by ISOBMFF. EditList is a technology mainly used to match playback timing of image and sound and the like. EditList can have a list of recommended viewing information such as media time, playback speed, and playback time at the playback speed, in terms of syntax. Therefore, use of EditList makes it possible to provide a playback method different from a normal playback method without damaging the media. Zero or one EditList is signaled to a track in the file as EditListBox(). Then, a media playback method in the track including EditListBox() is shown.

Here, in the 6DoF content, a scene description is used to arrange the 3D model constituting the 6DoF content in the three-dimensional space. The scene description includes coordinate transformation information for arranging the 3D model constituting the three-dimensional space in the three-dimensional space, access information for access to the bit stream corresponding to the 3D model, and the like. Therefore, it can be said that the 6DoF content includes such scene descriptions and 3D model data.

Therefore, in a case where EditList is used for the 6DoF content, it is generally considered to set EditListBox() in the track containing the scene description.

A specific storage method for EditList will be described. When the number of timed blocks to be played back by the same playback method is entry_count, each entry stores segment_duration that indicates the length of time to play back each block, media_time that indicates the time in media timeline, and media_rate_integer/media_rate_function that indicates a playback speed.

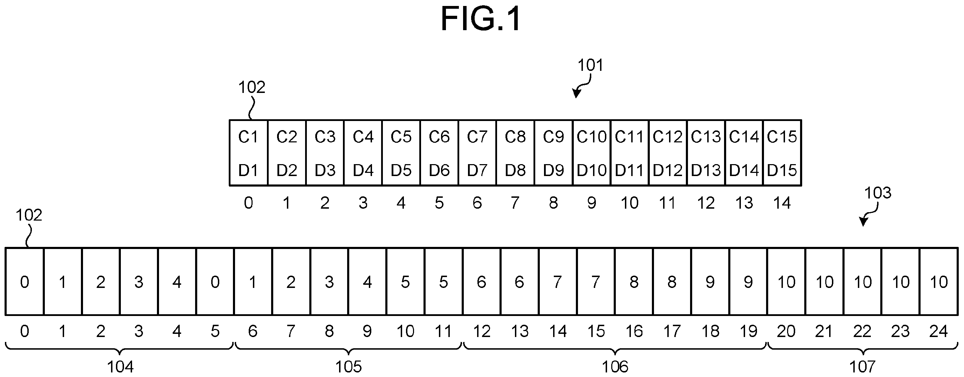

FIG. 1 is a diagram illustrating data reproduction using EditList. In a scene description 101, samples 102 are arranged according to the media timeline. The scene description 101 to be played back according to EditList is reproduced as shown in playback data 103. When entry_cont = 4, EditList has four blocks of data to be reproduced. The first entry_cont 104 indicates that data from 0 second to 5 second on the media timeline are reproduced at a normal speed, that is, 1x speed. The second entry_cont 105 has the same data as that of the first entry_cont 104, and therefore, indicates that the data of the first entry_cont 104 are reproduced again, for loop playback. The third entry_cont 106 indicates that data from 5 second to 10 second on the media timeline is reproduced at 1/2 speed. The fourth entry_cont 107 indicates that data at 10 second on the media timeline is paused for 5 seconds. When a negative value is specified for media_rate in EditList, it is also possible to achieve rewind playback, which is also called "play backward." In this way, the 6DoF content reproduced using EditList is played back in the playback timeline that is a timeline different from the media timeline. In other words, the media timeline represents the time axis of the 6DoF content itself, and the playback timeline is the time axis for playback. EditList specifies whether data at which time in the media timeline should be reproduced at which time in the playback timeline.

However, even if the media timeline based on the recommended viewport information and the timed metadata, which are described above, and the playback timeline based on EditList described above are combined and applied to the 6DoF content, only the timed playback information in the playback timeline is applied to the samples of the 6DoF content specified on the basis of CTS of the timed metadata, in the media timeline. For example, this means that while the display is paused in the playback timeline, other operation cannot be performed, that is, the viewpoint direction/position of the recommended viewport cannot be changed, and the same recommended viewport is continued to be displayed.

Therefore, it is impossible to pause the media timeline as described above and change the playback method of a certain scene.

Therefore, in order to appropriately provide a visual experience according to the intention of the provider in the 6DoF content, modified timed metadata is set that stores the recommended viewport information, such as the viewpoint position or a line-of-sight direction that indicates the recommended viewport to be displayed corresponding to the playback timeline, in the playback timeline. Furthermore, a method of setting recommended viewing time identification information to the modified timed metadata is provided to identify the recommended viewport information corresponding to the playback timeline in the modified timed metadata.

### [Configuration of system according to first embodiment]

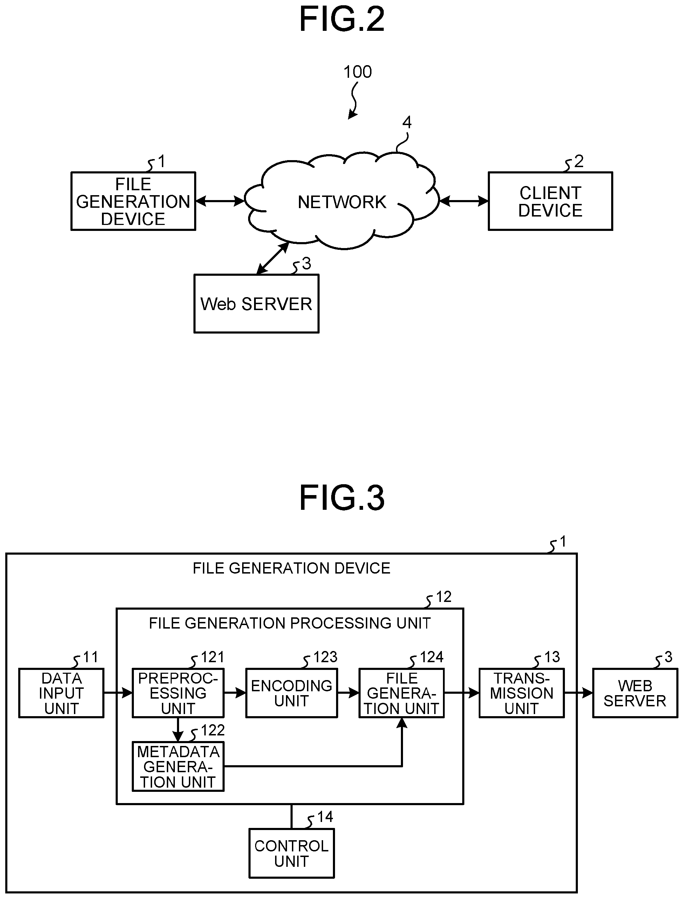

FIG. 2 is a system configuration diagram illustrating an example of a distribution system. A distribution system 100 includes a file generation device 1 that is an information processing device, a client device 2 that is a playback processing device, and a web server 3. The file generation device 1, the client device 2, and the web server 3 are connected to a network 4. Then, the file generation device 1, the client device 2, and the web server 3 are communicable with each other via the network 4. Here, although one device is illustrated each for the devices in FIG. 2, the distribution system 100 may include a plurality of the file generation devices 1 and a plurality of the client devices 2.

The file generation device 1 generates a file of 6DoF content that contains the timed playback information specifying a recommended timed playback order and the recommended viewing information specifying the recommended viewport along time passage. The file generation device 1 uploads the generated file of 6DoF content to the web server 3. Here, in the present embodiment, the configuration for providing the 6DoF content to the client device 2 by the web server 3 will be described, but the distribution system 100 may also have another configuration. For example, the file generation device 1 may include the functions of the web server 3 to store the generated 6DoF content in its own and provide the 6DoF content to the client device 2.

The web server 3 is connected to the client device 2 via the network 4. The web server 3 holds the file of 6DoF content generated by the file generation device 1. Then, the web server 3 provides 6DoF content specified according to a request from the client device 2.

The client device 2 transmits a transmission request for the file of 6DoF content generated by the file generation device 1, to the web server 3. Then, the client device 2 acquires the 6DoF content specified in the transmission request from the web server 3 via the network 4. Then, the client device 2 uses object data specified in the timed playback information according to the playback time to perform rendering in a line-of-sight direction at a viewpoint position specified in the recommended viewing information, generating a display image. This playback time is the time on the playback timeline. Then, the client device 2 displays the generated image on a display device such as a monitor. Here, when the file generation device 1 has the function of the web server 3, the client device 2 acquires the 6DoF content from the file generation device 1. In the following, various bit streams of the 6DoF content may be referred to as media data.

### [Configuration of file generation device according to first embodiment]

Next, the details of the file generation device 1 will be described. FIG. 3 is a block diagram of the file generation device. As illustrated in FIG. 3, the file generation device 1 includes a data input unit 11, a file generation processing unit 12, a transmission unit 13, and a control unit 14. The control unit 14 performs processing related to control of the file generation processing unit 12. For example, the control unit 14 performs integrated control for the operation timing or the like of each unit of the file generation processing unit 12. The file generation processing unit 12 includes a preprocessing unit 121, a metadata generation unit 122, an encoding unit 123, and a file generation unit 124.

The data input unit 11 receives an input of the original data of a target 6DoF content. The data received by the data input unit 11 includes control information for generating the object data and the metadata. The control information includes, for example, coordinate transformation information, position information, size, and the like. Furthermore, the control information includes the timed playback information specifying the recommended timed playback order and the recommended viewing information specifying a recommended viewing method according to the order of playback. The data input unit 11 outputs the acquired original data and control information to the preprocessing unit 121 of the file generation processing unit 12.

The preprocessing unit 121 receives an input of the original data and the control information of the target 6DoF content. Then, the preprocessing unit 121 identifies the object data and scene information for each scene included in the original data. Then, the preprocessing unit 121 acquires, from the control information, control information used for encoding, such as codec information. Then, the preprocessing unit 121 outputs the object data, the scene information, and the control information used for encoding, to the encoding unit 123. Furthermore, the preprocessing unit 121 outputs the control information to the metadata generation unit 122.

The metadata generation unit 122 receives an input of the control information, from the preprocessing unit 121. Then, the metadata generation unit 122 identifies samples each storing playback unit data arranged in the media timeline in the bit stream, from the control information. As illustrated in FIG. 1, in the scene description 101, the samples 102 are arranged with the media timeline as the time axis. The numbers on the lower side of the scene description 101 as seen from the front of the drawing represents the time on the media timeline. The samples 102 have composition timestamps (CTS) represented by C1 to C15 and decoding timestamps (DTS) represented by D1 to D15. In other words, the metadata generation unit 122 identifies individual samples 102 arranged along the media timeline.

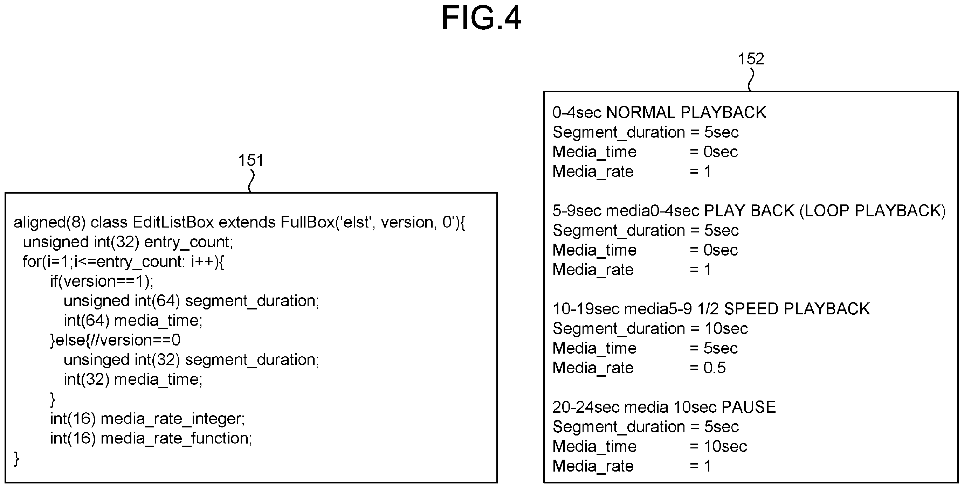

Then, the metadata generation unit 122 generates EditList that specifies samples storing playback unit data in the order of playback time, according to the timed playback information. FIG. 4 is a diagram illustrating an example of EditList. The metadata generation unit 122 generates EditList 151 represented using syntax illustrated in FIG. 4. The metadata generation unit 122 achieves normal playback, loop playback, 1/2 speed playback, and pausing by setting each parameter for each entry_count, as illustrated in a usage example 152.

The parameters set in EditList include Segment_duration, Media_time, and Media_rate. Here, Segment_duration is a duration of the corresponding entry_count. Media_time is the time on the media timeline that corresponds to the beginning of the corresponding entry_count. Media_rate is a playback speed when normal playback is 1.

Setting each parameter as shown in the usage example 152 allows arrangement of samples 102 each storing the playback unit data at each time point, as shown in the playback data 103 of FIG. 1. A number shown in each frame of the playback data 103 represents media time that is the time on the media timeline. Furthermore, each of numbers shown on the lower side of the playback data 103 as seen from the front of the drawing represents the time on the playback timeline. The entry_count 104 represents the normal playback, the entry_count 105 represents the loop playback, the entry_count 106 represents the 1/2 speed playback, and the entry_count 107 represents the pausing. In this way, the generation of EditList by the metadata generation unit 122 sets the sample so as to be played back according to the recommended timed playback order, as shown in the playback data 103.

Furthermore, the metadata generation unit 122 associates data indicating the recommended viewport information with data to be reproduced according to the generated EditList. Specifically, the metadata generation unit 122 generates the modified timed metadata indicating the viewpoint position and the line-of-sight direction according to the playback timeline, for the scene description reproduced according to EditList. The timed metadata is data corresponding to time passage in the media timeline, whereas the modified timed metadata is data corresponding to time passage in the playback timeline.

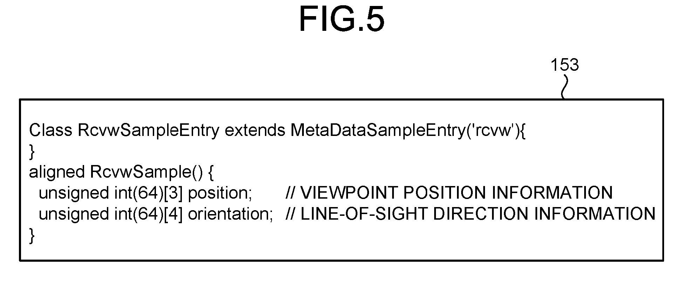

FIG. 5 is a diagram illustrating an example of syntax of the modified timed metadata. For example, the metadata generation unit 122 generates modified timed metadata 153 as illustrated in FIG. 5. The metadata generation unit 122 sets viewpoint position information and line-of-sight direction information for each playback time, into the modified timed metadata 153.

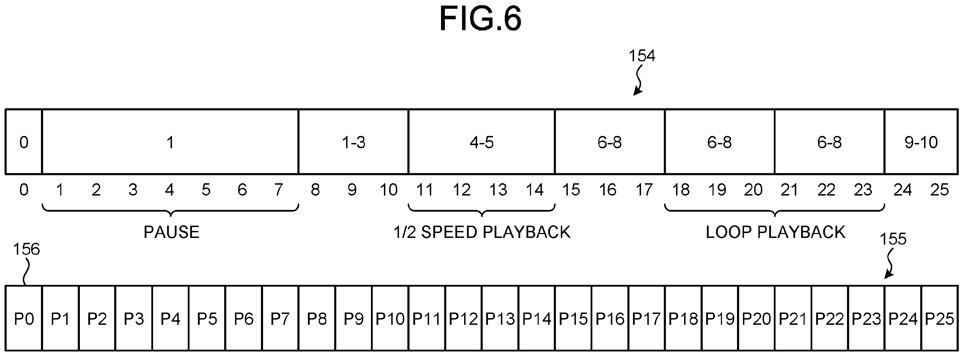

FIG. 6 is a diagram illustrating association of the recommended viewport information with Editlist. As illustrated in FIG. 6, the metadata generation unit 122 generates modified timed metadata 155 indicating the viewpoint position and the line-of-sight direction for each playback time, for playback data 154 obtained by reproducing the scene description according to the Editlist. Thus, recommended viewport information 156 is assigned to each sample in the playback timeline, as shown in the modified timed metadata 155. A number shown in each frame of the modified timed metadata 155 represents identification information for identifying the recommended viewport information corresponding to the time on the playback timeline.

Furthermore, the metadata generation unit 122 shows a reference relationship between a track that stores EditList and a track that stores the modified timed metadata by using Track Reference Box(tref), such as reference_type='rcvw'. This configuration makes it possible for the metadata generation unit 122 to show the recommended viewing information according to the recommended timed playback order.

Furthermore, the metadata generation unit 122 generates metadata such as time information about each sample. Then, the metadata generation unit 122 outputs the generated Editlist, the modified timed metadata, and metadata including information about the reference relationship between the track that stores EditList and the track that stores the modified timed metadata, to the file generation unit 124.

The encoding unit 123 receives an input of the object data for each scene and the control information used for encoding, from the preprocessing unit 121. Then, the encoding unit 123 encodes the object data by using the control information and generates bit streams. Then, the encoding unit 123 outputs each of the generated bit streams to the file generation unit 124.

Furthermore, the encoding unit 123 receives an input of information about the object including the coordinate transformation information and the access information. Then, the encoding unit 123 encodes the coordinate transformation information and the information about the object to generate the scene description. Then, the encoding unit 123 outputs data of the generated scene description, to the file generation unit 124.

The file generation unit 124 receives an input of the bit stream from the encoding unit 123. Furthermore, the file generation unit 124 receives an input of the data of the scene description, from the encoding unit 123. Furthermore, the file generation unit 124 receives an input of the EditList, the modified timed metadata, and the metadata including the information about the reference relationship between the track that stores EditList and the track that stores the modified timed metadata, from the metadata generation unit 122. Then, the file generation unit 124 divides the acquired bit stream and the scene description into segments.

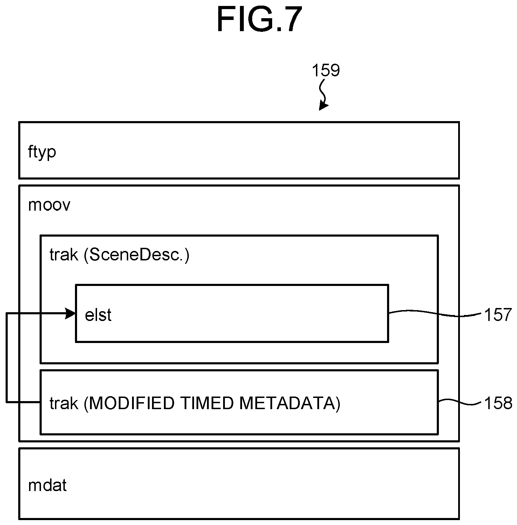

FIG. 7 is a diagram illustrating an ISOBMFF file according to the first embodiment. The file generation unit 124 stores each of the segments of the divided bit stream and scene description, in mdat which is shown in a file 159.

Furthermore, the file generation unit 124 stores management information for the scene description, in a track in a moov box. In addition, the file generation unit 124 stores Editlist in a box 157 in the track that stores the management information for the scene description. Furthermore, the file generation unit 124 stores the modified timed metadata, in another track 158 in the moov box. Then, the file generation unit 124 shows the reference relationship between Editlist stored in the box 157 and the modified timed metadata stored in the track 158 by using tref. For example, the file generation unit 104 shows the reference relationship, as reference_type='rcvw'.

Then, the file generation unit 124 outputs segment files to the transmission unit 13. In each of the segment files, each of the segments of the divided bit stream and scene description, EditList, and the modified timed metadata are stored in the ISOBMFF file.

The transmission unit 13 receives an input of the segment files of the 6DoF content, from the file generation unit 124. Then, the transmission unit 13 transmits and uploads the acquired segment files of the 6DoF content to the web server 3.

### [Configuration of client device according to first embodiment]

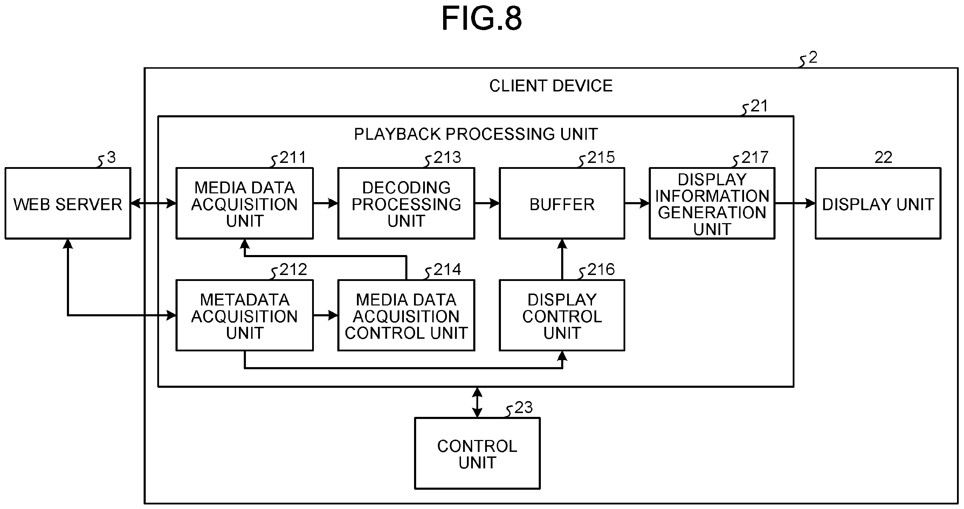

FIG. 8 is a block diagram of the client device. As illustrated in FIG. 8, the client device 2 includes a playback processing unit 21, a display unit 22, and a control unit 23. The control unit 23 controls the operation of each unit of the playback processing unit 21. For example, the control unit 23 integrally controls operation timing of the respective units of the playback processing unit 21. The playback processing unit 21 includes a media data acquisition unit 211, a metadata acquisition unit 212, a decoding processing unit 213, a media data acquisition control unit 214, a buffer 215, a display control unit 216, and a display information generation unit 217.

The metadata acquisition unit 212 accesses the web server 3 and acquires the metadata from the segment files. Then, the metadata acquisition unit 212 parses the acquired metadata and acquires the management information for the scene description. Furthermore, the metadata acquisition unit 212 acquires EditList contained in the track that stores the management information for the scene description. In addition, the metadata acquisition unit 212 analyzes the modified timed metadata and acquires the recommended viewing information for each playback time.

Next, the metadata acquisition unit 212 acquires the scene description from the web server 3 and parses the scene description. Then, the metadata acquisition unit 212 outputs a result of the parsing of the scene description, and the timed playback information and recommended viewport information, to the display control unit 216. Furthermore, the metadata acquisition unit 212 acquires the coordinate transformation information and the access information for access to the bit stream, from the result of the parsing of the scene description, and outputs both information to the media data acquisition control unit 214.

The media data acquisition control unit 214 receives the coordinate transformation information and the access information for access to the bit stream, from the metadata acquisition unit 212. Then, the media data acquisition control unit 214 selects a bit stream to be played back, from the coordinate transformation information and the access information for access to the bit stream. Then, the media data acquisition control unit 214 outputs information about the selected bit stream, to the media data acquisition unit 211.

The media data acquisition unit 211 receives an input of the information about the bit stream to be played back, selected by the media data acquisition control unit 214. Then, the media data acquisition unit 211 accesses the web server 3 and requests and acquires the segment files of the selected bit stream. After that, the media data acquisition unit 211 outputs the acquired segment files of the bit stream to the decoding processing unit 213.

The decoding processing unit 213 receives an input of the bit stream, from the media data acquisition unit 211. Then, the decoding processing unit 213 performs combining processing on the acquired bit stream. After that, the decoding processing unit 213 outputs the decoded bit stream to the buffer 215.

The display control unit 216 receives an input of the result of the parsing of the scene description, and the timed playback information and recommended viewing information, from the metadata acquisition unit 212. Then, the display control unit 216 identifies the recommended viewing information for each time point on the playback timeline. Then, the display control unit 216 collectively outputs the result of the parsing of the scene description, the timed playback information, and the recommended viewing information for each time point on the playback timeline, to the buffer 215.

The buffer 215 receives an input of the bit stream, from the decoding processing unit 213. Furthermore, the buffer 215 receives an input of the result of the parsing of the scene description, the timed playback information, and the recommended viewing information for each time point on the playback timeline, from the display control unit 216. Then, the buffer 215 stores the bit stream, information about the scene description corresponding to the bit stream, the timed playback information, and the recommended viewing information for each time point on the playback timeline, in association with each other.

The display information generation unit 217 acquires the bit stream, information about the scene description corresponding to the bit stream, the timed playback information, and the recommended viewing information for each time point on the playback timeline, from the buffer 215. Then, the display information generation unit 217 arranges, in the three-dimensional space, the 3D model according to the order of playback specified in the timed playback information by using the coordinate transformation information and the timed playback information, for the acquired bit stream. Furthermore, the display information generation unit 217 renders the 3D model arranged in the three-dimensional space, according to the viewpoint position and the line-of-sight direction that are specified in the recommended viewing information, and generates a display image. Then, the display information generation unit 217 supplies the generated display image to a display unit 191.

The display unit 22 has a display device such as a monitor. The display unit 22 receives an input of the display image generated by the display information generation unit 217. Then, the display unit 22 displays the acquired display image on the display device along time passage, and plays back the 6DoF content.

### [File generation procedure according to first embodiment]

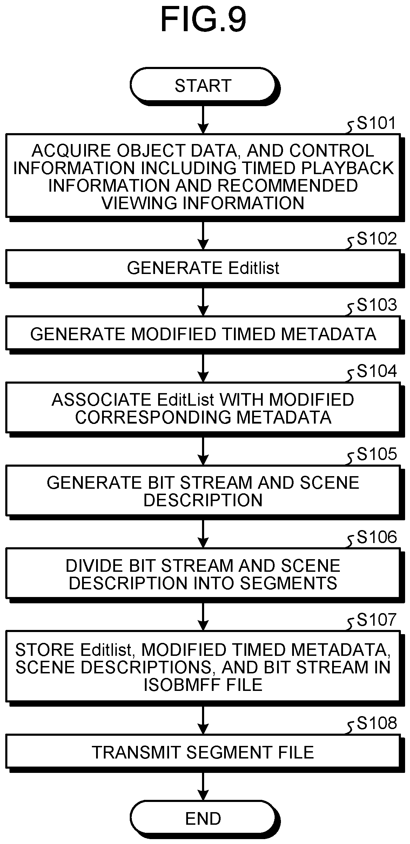

Next, a file generation process performed by the file generation device 1 according to the first embodiment will be described with reference to FIG. 9. FIG. 9 is a flowchart of the file generation process performed by the file generation device according to the first embodiment.

The data input unit 11 acquires the object data according to the media timeline, and the control information including the timed playback information and recommended viewport information (Step S101). Then, the data input unit 11 outputs the object data according to the media timeline, and the control information including the timed playback information and recommended viewport information, to the preprocessing unit 121 of the file generation processing unit 12.

The preprocessing unit 121 divides the data acquired from the data input unit 11, into the object data and the information about the object including the coordinate transformation information and the like. Then, the preprocessing unit 121 outputs the object data and the control information used for encoding, to the encoding unit 123. Furthermore, the preprocessing unit 121 outputs information about the state of the object, control information about compression and the like, the timed playback information, and the recommended viewport information, to the metadata generation unit 122. The metadata generation unit 122 receives an input of the information about the state of the object, control information about compression and the like, the timed playback information, and the recommended viewport information, from the preprocessing unit 121. Then, the metadata generation unit 122 generates EditList by using the timed playback information and the control information. In addition, the metadata generation unit 122 generates the modified timed metadata by using the timed playback information and the recommended viewing information (Step S102). Furthermore, the metadata generation unit 122 also generates other metadata by using the control information. Then, the metadata generation unit 122 outputs the metadata including EditList and the modified timed metadata, to the file generation unit 124.

The encoding unit 123 encodes the object data by using the control information and generates the bit stream. Furthermore, the encoding unit 123 uses the information about the object including the coordinate transformation information and the like acquired from the preprocessing unit 121 to generate the scene description (Step S103). Then, the encoding unit 123 outputs the data of the generated bit stream and scene description to the file generation unit 124.

The file generation unit 124 divides the bit stream into segments, on the basis of the data of the bit stream. In addition, the file generation unit 124 divides the scene description into segments (Step S104).

Then, the file generation unit 124 generates the segment files. In each of the segment files, each of the segments of the divided bit stream and scene description, EditList, and the modified timed metadata are stored in ISOBMFF (Step S105). In this configuration, the file generation unit 124 stores Editlist in a track containing the scene description, in association with each other. Furthermore, the file generation unit 104 stores the modified timed metadata in another track, and associates the another track with the track containing EditList. After that, the file generation unit 124 outputs the generated segment files to a transmission unit 105.

A transmission unit 125 acquires the segment files from the file generation unit 124, and transmits and uploads the segment files to the web server 3 (Step S106).

### [Procedure of playback process according to first embodiment]

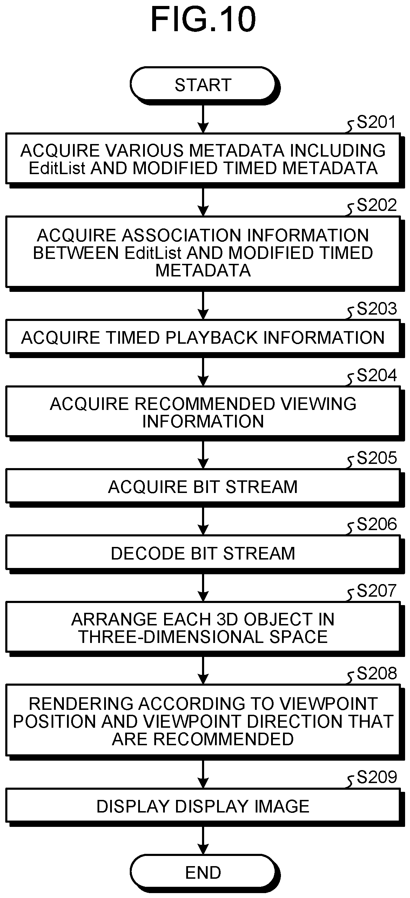

Next, the playback process performed by the client device 2 according to the present embodiment will be described with reference to FIG. 10. FIG. 10 is a flowchart of the playback process performed by the client device according to the first embodiment.

The metadata acquisition unit 212 acquires the metadata of the 6DoF content to be played back, from the web server 3. Then, the metadata acquisition unit 212 parses the acquired metadata, and acquires the management information for the scene description, EditList, and various metadata including the modified timed metadata (Step S201).

Next, the metadata acquisition unit 212 analyzes EditList and the modified timed metadata, and acquires the timed playback information and the recommended viewing information (Step S202). Furthermore, the metadata acquisition unit 212 acquires and parses the scene description. Then, the metadata acquisition unit 212 outputs a result of the parsing of the scene description, the timed playback information, and the recommended viewport information, to the display control unit 216. Furthermore, the metadata acquisition unit 212 outputs the result of the parsing of the scene description, to the media data acquisition control unit 214. The display control unit 216 receives the result of the parsing of the scene description, the timed playback information, and the recommended viewport information, from the metadata acquisition unit 212. After that, the display control unit 216 collectively stores the result of the parsing of the scene description, the timed playback information for each scene description, and visual information for each time point in the timed playback, in the buffer 215.

The media data acquisition control unit 214 acquires the access information for access to the bit stream, on the basis of the result of the parsing of the scene description acquired from the metadata acquisition unit 212. Then, the media data acquisition control unit 214 selects a bit stream by using the access information. After that, the media data acquisition control unit 214 outputs the information about the selected bit stream, to the media data acquisition unit 211. The media data acquisition unit 211 acquires the bit stream selected by the media data acquisition control unit 214, from the web server 3 (Step S203). Then, the media data acquisition unit 211 outputs the acquired bit stream to the decoding processing unit 213.

The decoding processing unit 213 decodes the bit stream acquired from the media data acquisition unit 211 (Step S204). The decoding processing unit 213 stores the decoded bit stream in the buffer 215.

The display information generation unit 217 acquires the bit stream, the timed playback information, the recommended viewing information for each time point in the timed playback, and the result of the parsing of the scene description, from the buffer 215. Then, the display information generation unit 217 arranges each 3D model in the three-dimensional space by using the arrangement position and the coordinate transformation information indicated by the result of the parsing of the scene description, according to the timed playback information (Step S205).

Next, the display information generation unit 217 renders each 3D model arranged in the three-dimensional space, according to the viewpoint position information and the line-of-sight direction information recommended for each time point, and generates the display image (Step S206). Then, the display information generation unit 217 outputs the generated display image to the display unit 22.

The display unit 22 displays the display image acquired from the display information generation unit 217, on the display device such as the monitor (Step S207).

Then, the control unit 23 determines whether the playback of the 6DoF content is completed (Step S208).

When playback is not completed (Step S208: negative), the control unit 23 instructs the metadata acquisition unit 212 to acquire the scene description at the next time point. The metadata acquisition unit 212 receives the instruction from the control unit 23 and returns to Step S201.

On the other hand, when playback is completed (Step S208: affirmative), the control unit 23 notifies the playback processing unit 21 of the end of the generation of the file. Upon receiving the notification from the control unit 23, the playback processing unit 21 finishes the playback process of the 6DoF content.

As described above, the file generation device according to the present embodiment generates EditList having the timed playback information that indicates the recommended playback order as the time on the media timeline. In addition, the file generation device generates the modified timed metadata, for each time point on the playback timeline. The modified timed metadata includes the recommended viewing information including the information about the recommended viewpoint position and line-of-sight direction, and the playback timeline represents the time axis of playback using the timed playback information. Then, the file generation device stores EditList in a track of the ISOBMFF file containing the scene description, further stores the modified timed metadata in another track, and defines the reference relationship between the another track and the track containing EditList. Therefore, it is possible to provide the recommended viewport for the user while performing playback in the recommended timed playback order. Therefore, it is possible to provide the appropriate viewing experience according to the intention of the provider, for the user. For example, in a series of playbacks, the slow-motion playback, the loop playback, pausing, and the like at timing intended by the video creator can be implemented.

Furthermore, for example, in terms of providing the timed playback information, a method of achieving the pausing or slow-motion playback by editing the content itself processes the content once, thus preventing viewing in the normal playback. On the other hand, when EditList is used as in the present embodiment, the timed playback information for the media can be stored as a list in EditList, preventing edition of the content itself, thus enabling viewing in the normal playback.

### [1.1 Modification (1) of first embodiment]

Next, Modification (1) of the first embodiment will be described. The file generation device 1 according to the present modification stores information corresponding to EditList, in a box newly defined, and notifies of the timed playback information.

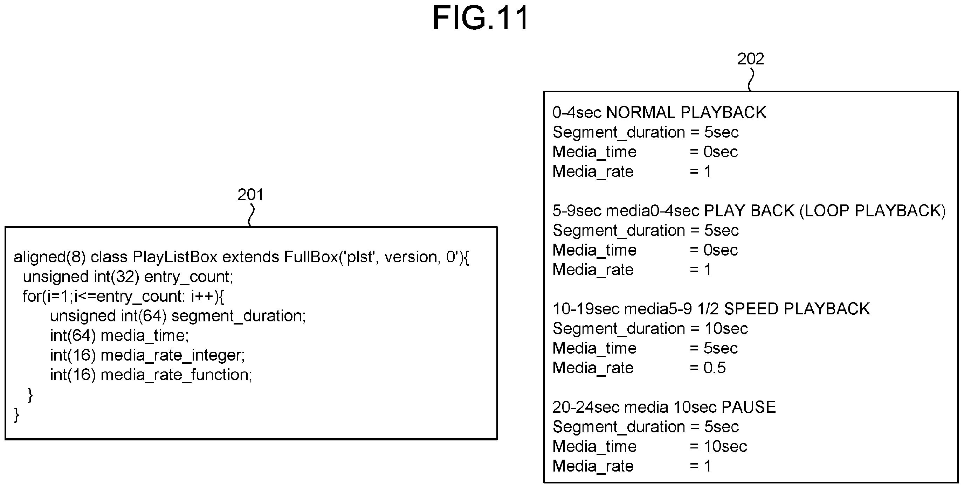

The metadata generation unit 122 according to the present modification newly defines PlayListBox() and the like that indicates a playlist containing information corresponding to EdtList instead of extending the definition of EditListBox(), but. For example, the metadata generation unit 107 generates the newly defined PlayListBox() represented using syntax 201 illustrated in FIG. 11, and sets the timed playback information to be assigned to the scene description. FIG. 11 is a diagram illustrating an example of the syntax of the playlist according to Modification (1) of the first embodiment. The metadata generation unit 122 achieves normal playback, loop playback, 1/2 speed playback, and pausing by setting each parameter for each entry_count, as shown in a usage example 202.

Furthermore, the metadata generation unit 122 generates the modified timed metadata indicating the viewpoint position and the line-of-sight direction according to the playback timeline, for the scene description reproduced according to the created playlist. Furthermore, the metadata generation unit 122 sets Track Reference Box(tref) that indicates the reference relationship between the track that stores the playlist and the track that stores the modified timed metadata.

In addition, the metadata generation unit 122 generates EditList for synchronization between image and sound. In this case, the metadata generation unit 122 sets EditList so that EditList is stored in a track containing a video 3D model that is different from the track containing the scene description.

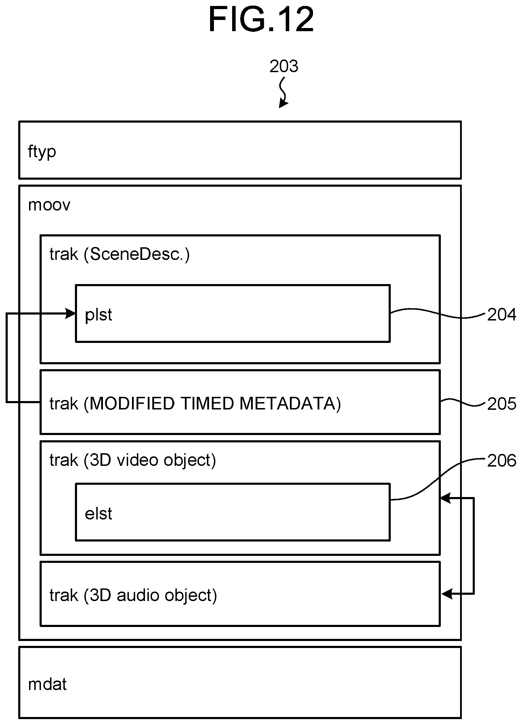

The file generation unit 124 generates the ISOBMFF file according to an instruction from the metadata generation unit 122. For example, the file generation unit 124 stores the playlist in a box 204 in a track of the ISOBMFF file containing the scene description, as illustrated in FIG. 12. FIG. 12 is a diagram illustrating an example of storing the playlist in the ISOBMFF file, according to Modification (1) of the first embodiment. In this configuration, the playlist is described in a binary format. Furthermore, the file generation unit 124 stores the modified timed metadata in a box 205 that is different from the track containing the scene description. Furthermore, the file generation unit 124 shows the reference relationship between the track that stores the playlist and the track that stores the modified corresponding metadata by using tref such as reference_type='rcvw'.

Furthermore, the file generation unit 124 stores EditList in a box 206 in the track containing the video 3D model. According to this EditList, playback synchronization control is performed between the video and sound of the 3D model.

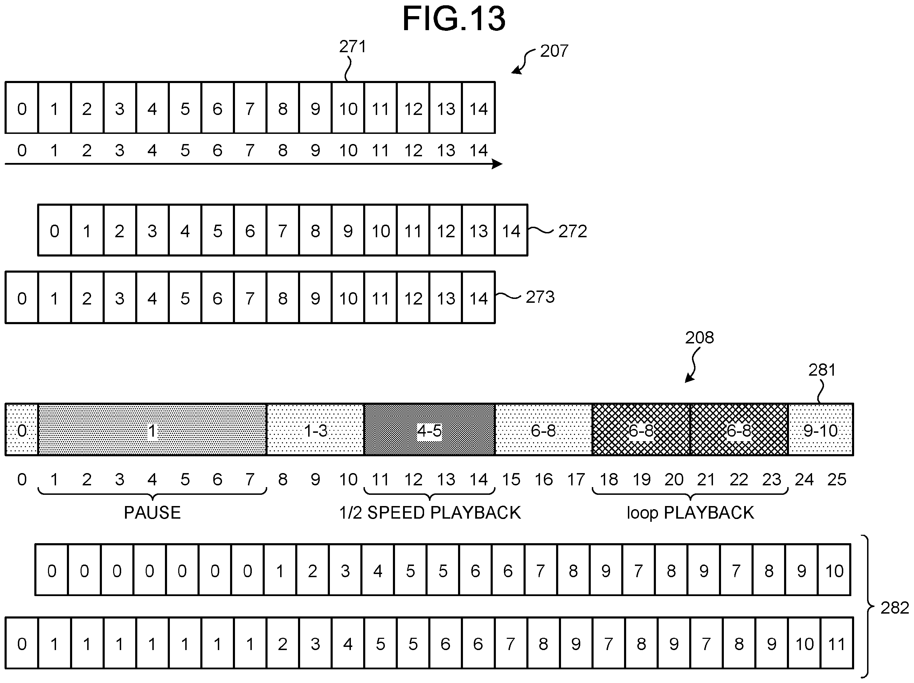

FIG. 13 is a diagram illustrating a playback state in simultaneous use of the playlist and EditList. For example, the 6DoF content generated by the file generation device 1 according to the present exemplary embodiment is played back as illustrated in FIG. 13.

A reproduction timing chart 207 shows reproduction synchronization between image and sound according to the EditList. In other words, EditList matches the timing between image reproduction 272 and sound reproduction 273 to a scene description 271. Then, when the playback is performed according to the playlist after the playback synchronization between the image and the sound is performed according to EditList, the playback as shown in a reproduction timing chart 208 is performed. In this configuration, playback according to the timed playback information indicated in the playlist while performing synchronization between the image and the sound according to this EditList provides the playback as indicated in playback data 218. For each sample of the playback data 218, playback is performed as indicated in image/sound reproduction 282.

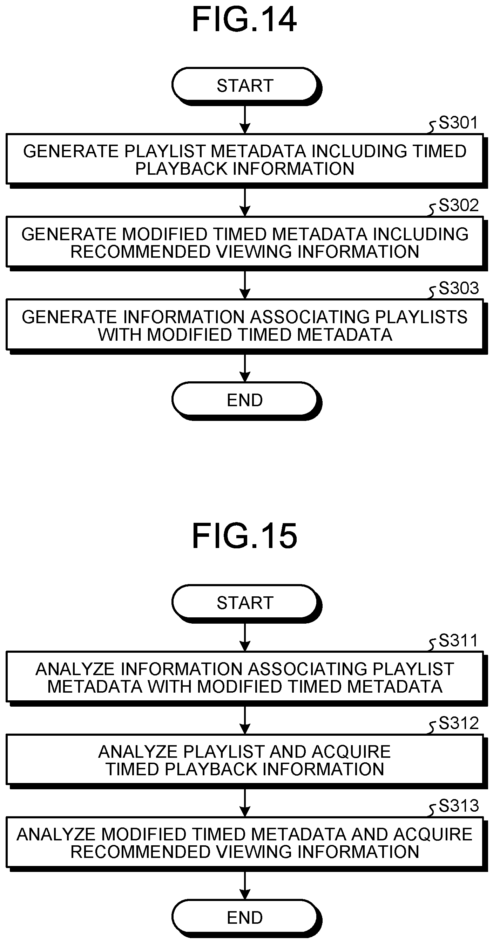

Here, a metadata generation process in Modification (1) of the first embodiment will be described with reference to FIG. 14. FIG. 14 is a flowchart of the metadata generation process according to Modification (1) of the first embodiment.

The metadata generation unit 122 generates playlist metadata including the timed playback information (Step S301).

Furthermore, the metadata generation unit 122 generates the modified timed metadata including the recommended viewing information (Step S302).

Next, the metadata generation unit 122 generates information associating the playlist with the modified timed metadata (Step S303).

Next, a metadata analysis process in Modification (1) of the first embodiment will be described with reference to FIG. 15, FIG. 15 is a flowchart of the metadata analysis process according to Modification (1) of the first embodiment.

The metadata acquisition unit 212 analyzes the metadata of the 6DoF content to be played back and acquires information for associating the playlist metadata with the modified timed metadata (Step S311).

Next, the metadata acquisition unit 212 analyzes the playlist metadata and acquires the timed playback information (Step S312).

Next, the metadata acquisition unit 212 analyzes the modified timed metadata associated with the playlist and acquires the recommended viewport information corresponding to the timed playback information (Step S313) .

As described above, the file generation device according to the present exemplary embodiment provides the timed playback information by using the playlist. Therefore, EditList is used for intended application, and the timed playback information is applied by using the playlist, achieving clearly separated use. In other words, EditList is included for synchronization between the image and the sound, enabling recommended timed playback according to the playlist, in a synchronized state. Therefore, the 6DoF content can be displayed by the recommended playback method, according to the recommended viewpoint position and line-of-sight direction.

### [2. Second Embodiment]

In the existing technology, only one EditList can be associated with one track. Therefore, in order to provide multiple variations for the playback method, preparation of multiple same scene descriptions and association of EditList with each of the scene descriptions are redundantly required. Therefore, the file generation device 1 according to the present embodiment associates a plurality of sets of timed playback information and a plurality of sets of recommended viewing information with the identical scene description. The file generation device 1 according to the present embodiment also has a configuration as illustrated in the block diagram of FIG. 3. In the following, description of the function of each unit similar to that in the first embodiment will be omitted.

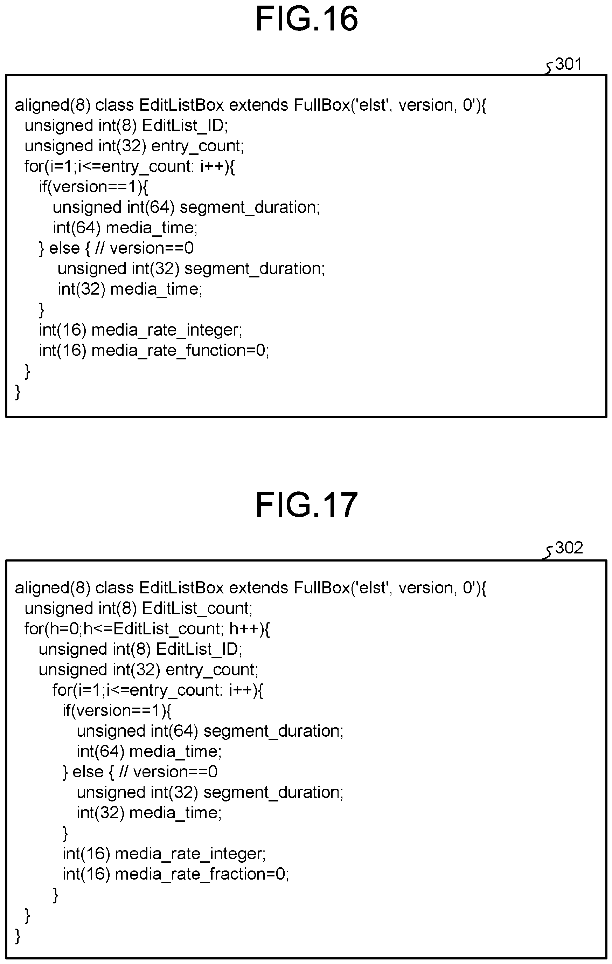

The metadata generation unit 122 sets EditList_ID, that is an identifier for identifying each EditList, to each EditList. Then, the metadata generation unit 122 generates extended EditListBox represented using syntax 301 illustrated in FIG. 16. FIG. 16 is a diagram illustrating an example of the syntax of EditList according to a second embodiment. The metadata generation unit 107 sets the timed playback information for each EditList_ID as shown in the syntax 301.

Here, the metadata generation unit 122 may achieve the extension so as to have a plurality of types of list information in one EditList as shown in syntax 302 of FIG. 17. FIG. 17 is a diagram illustrating an example of EditList having the plurality of types of list information.

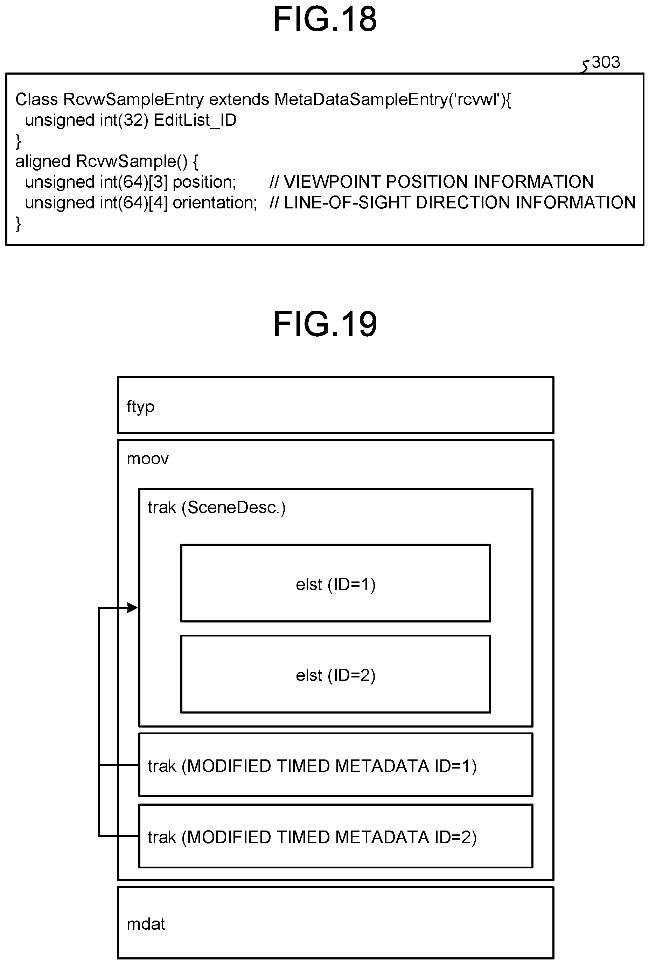

Furthermore, the metadata generation unit 122 generates the modified timed metadata indicating the recommended viewing information corresponding to each EditList represented using syntax 303 illustrated in FIG. 18. FIG. 18 is a diagram illustrating an example of the syntax of the modified timed metadata according to the second embodiment. The metadata generation unit 122 sets EditList_ID of EditList corresponding to each modified timed metadata, in each modified timed metadata. Then, the metadata generation unit 122 sets the respective sets of modified timed metadata to be stored in different tracks. Furthermore, the metadata generation unit 122 sets the reference relationship between each track that stores the modified timed metadata and the track that stores EditLists.

The file generation unit 124 generates the ISOBMFF file according to the instruction from the metadata generation unit 122. For example, the file generation unit 124 stores a plurality of EditLists in the track that contains the scene description in the ISOBMFF file, as illustrated in FIG. 19. FIG. 19 is a diagram illustrating an example of storing EditLists in an ISOBMFF file according to the second embodiment. This configuration makes it possible for the file generation unit 124 to associate the plurality of EditLists with one track, that is, one scene description.

Furthermore, the file generation unit 124 stores the modified timed metadata in a track different from the track containing the scene description. At this time, the file generation unit 124 stores the respective sets of modified corresponding metadata corresponding to different EditLists in different tracks. Furthermore, the file generation unit 124 shows the reference relationship between the track that stores each modified timed metadata and the track that stores EditLists, by using 'tref' such as reference_type ='rcvw'.

As described above, the file generation device according to the present exemplary embodiment associates a plurality of sets of timed playback information and a plurality of sets of recommended viewing information with one scene description. This configuration makes it possible for the recommended playback method to have multiple variations. In other words, in reproduction of the scene description, it is possible to select one of the recommended timed playback methods to provide the 6DoF content.

Furthermore, in the present embodiment, the use of EditLists has been described, but even when playlists newly defined are used, association of each playlist with each modified timed metadata by using the identifier of each playlist makes it possible to use a plurality of playlists.

### [2.1-1 Modification (1-1) of Second Embodiment]

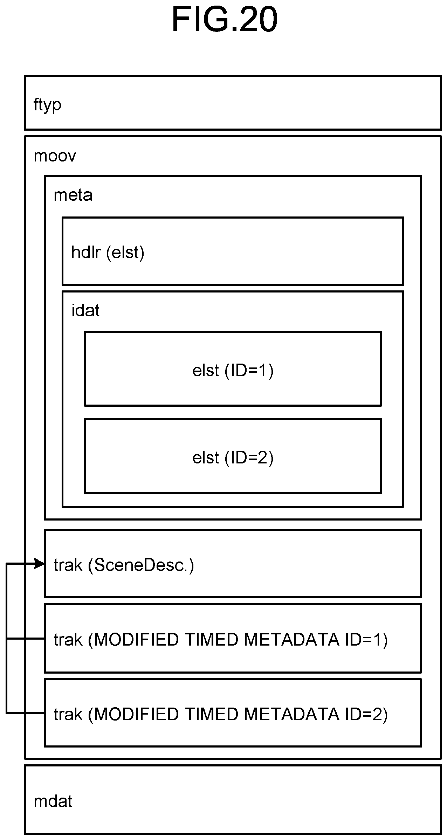

Next, Modification (1-1) of the second embodiment will be described. FIG. 20 is a diagram illustrating an example of storing EditLists in an ISOBMFF file, according to Modification (1) of the second embodiment.

In a case where EditList is stored in a track containing media such as the scene description, a media track that is a track containing the information about the bit stream is to be processed, in changing or adding EditList. In the present modification, the file generation device 1 according to the present modification extends EditList to a place other than the track containing the bit stream, and stores EditList in a place other than the track containing the media.

For example, the metadata generation unit 122 sets EditListBox to be stored in an idat box in a meta box of the ISOBMFF file. In this configuration, the metadata generation unit 122 stores handler_type='elst' or the like in a hdlr box in the meta box to show that EditListBosx () ('elst') that stores the timed playback information is stored in the meta box. Here, elst is an identifier indicating EditListBox.

In this case as well, the metadata generation unit 122 generates the modified timed metadata indicating the recommended viewing information corresponding to each EditList. The metadata generation unit 122 sets EditList_ID of EditList corresponding to each modified timed metadata, in each modified timed metadata. Then, the metadata generation unit 122 sets the respective sets of modified timed metadata to be stored in different tracks. Furthermore, the metadata generation unit 122 sets a reference relationship between the track that stores each modified timed metadata and the track that stores the scene description.

The file generation unit 124 stores a plurality of Editlists in the idat box in the meta box of the ISOBMFF file, as illustrated in FIG. 20, according to an instruction from the metadata generation unit 122. The file generation unit 124 further stores the modified timed metadata corresponding to each EditList therein. Furthermore, the file generation unit 124 sets the reference relationship with the track that contains the scene description by using tref such as reference_type ='rcvw'.

As described above, even when EditList is stored in a place other than the track containing the media, a recommended playback method or viewing method can be provided. In addition, the track itself that manages the media such as the scene description is not processed, but the change or addition can be made by EditList alone.

Furthermore, in the present embodiment, the use of EditList has been described, but even when playlists newly defined are used, the playlists can be stored as well in tracks different from the track containing the scene description.

### [2.1-2 Modification (1-2) of Second Embodiment]

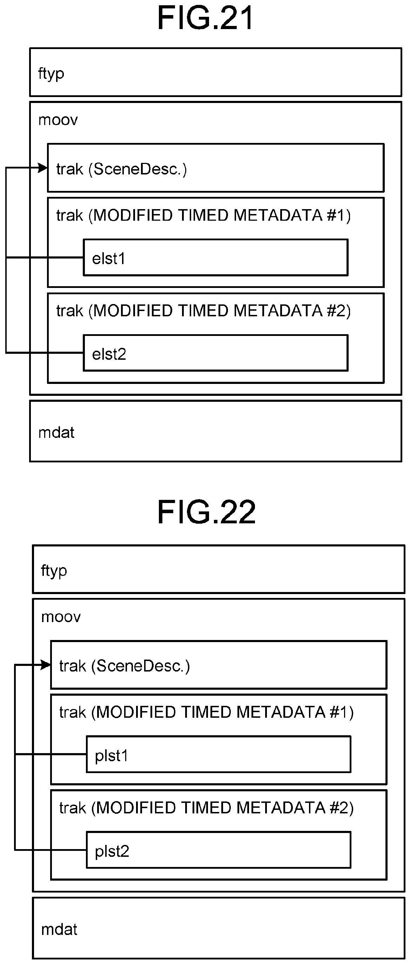

Next, Modification (1-2) of the second embodiment will be described. FIG. 21 is a diagram illustrating an example of storing EditLists in an ISOBMFF file, according to Modification (2) of the second embodiment.

The metadata generation unit 122 sets, as a storage destination of EditList, a track containing the modified timed metadata that is associated with EditList and includes the recommended viewing information. In this configuration, the modified timed metadata indicating the recommended viewing information is directly associated with EditList indicating the timed playback information, and thereby, the metadata generation unit 122 does not need to set the identification information of EditList. Furthermore, the metadata generation unit 122 sets the reference relationship between the track that stores each modified timed metadata and the track that stores the scene description.

The file generation unit 124 stores the modified timed metadata corresponding to each EditList in the ISOBMFF file, according to an instruction from the metadata generation unit 122. Next, as illustrated in FIG. 20, in the ISOBMFF file, the file generation unit 124 stores different EditLists in boxes each associated with the modified timed metadata. In FIG. 19, modified timed metadata #1 and modified timed metadata #2 represents different modified timed metadata. In addition, in FIG. 20, elst1 and elst2 represent different EditLists. Furthermore, the file generation unit 124 sets the reference relationship between each track that contains the modified timed metadata and the track that contains the scene description, by using tref such as reference_type ='rcvw'.

As described above, even when EditList is stored in the track that contains the modified timed metadata storing the recommended viewing information, a recommended playback method or viewing method can be provided. In addition, the track itself that manages the media such as the scene description is not processed, but the change or addition can be made by EditList alone.

### [2.1-3 Modification (1-3) of Second Embodiment]

Next, Modification (1-3) of the second embodiment will be described. FIG. 22 is a diagram illustrating an example of storing the playlists in an ISOBMFF file, according to Modification (1-3) of the second embodiment. The file generation device 1 according to the present exemplary embodiment uses the playlist including information equivalent to EditList to associate a plurality of sets of timed playback information with the identical scene description.

The metadata generation unit 122 defines a new PlayListBox that stores the playlist including information equivalent to EditList. For example, the metadata generation unit 122 generates different playlists having the syntax 201 illustrated in FIG. 11. The metadata generation unit 122 stores different sets of timed playback information in the playlists. Then, the metadata generation unit 122 sets storage destinations of the generated different playlists to the tracks that contain different sets of modified timed metadata. Furthermore, the metadata generation unit 122 sets the reference relationship between the track that stores each modified timed metadata and the track that stores the scene description.

The file generation unit 124 stores the modified timed metadata corresponding to each playlist in the ISOBMFF file, according to an instruction from the metadata generation unit 122. Next, as illustrated in FIG. 21, in the ISOBMFF file, the file generation unit 124 stores the different playlists in boxes each associated with the modified timed metadata. In FIG. 21, plst1 and plst2 represent different playlists. Furthermore, the file generation unit 124 sets the reference relationship between each track that contains the modified timed metadata and the track that contains the scene description, by using tref such as reference_type ='rcvw'.

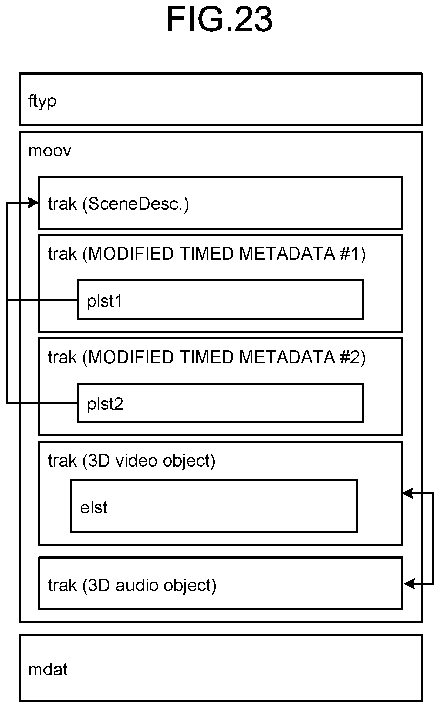

Furthermore, this configuration allows simultaneous use of EditList and the playlist. FIG. 23 is a diagram illustrating an example of storing EditList and the playlist that are used simultaneously, in the ISOBMFF file, according to Modification (1-3) of the second embodiment.

In this configuration, the metadata generation unit 122 generates EditList for synchronization between image and sound. Then, the metadata generation unit 122 sets EditList so that EditList is stored in a track containing a video 3D model that is different from the track containing the scene description.

As illustrated in FIG. 23, the file generation unit 124 stores EditList in the box 206 of the track containing the 3D model for video in the ISOBMFF file, according to an instruction from the metadata generation unit 122. According to this EditList, playback synchronization control is performed between the video and sound of the 3D model. In this configuration, EditList is used for intended application, and the timed playback information is applied by using the playlist, achieving clearly separated use. In other words, EditList is included for synchronization between the image and the sound, enabling recommended timed playback according to the playlist, in a synchronized state. Therefore, the 6DoF content can be displayed by the recommended playback method, according to the recommended viewpoint position and line-of-sight direction.

As described above, even when the playlist including information equivalent to EditList is stored in the track that contains the modified timed metadata storing the recommended viewing information, a recommended playback method or viewing method can be provided. In addition, the track itself that manages the media such as the scene description is not processed, but the change or addition can be made by playlist alone.

### [2.1-4 Modification (1-4) of Second Embodiment]

Next, Modification (1-4) of the second embodiment will be described. In the file generation device 1 according to the present exemplary embodiment, the playlist including information equivalent to EditList is written in synchronized multimedia integration language (SMIL). SMIL is an xml language for creating a multimedia presentation, for controlling a media playback time and laying out a presentation on a screen.

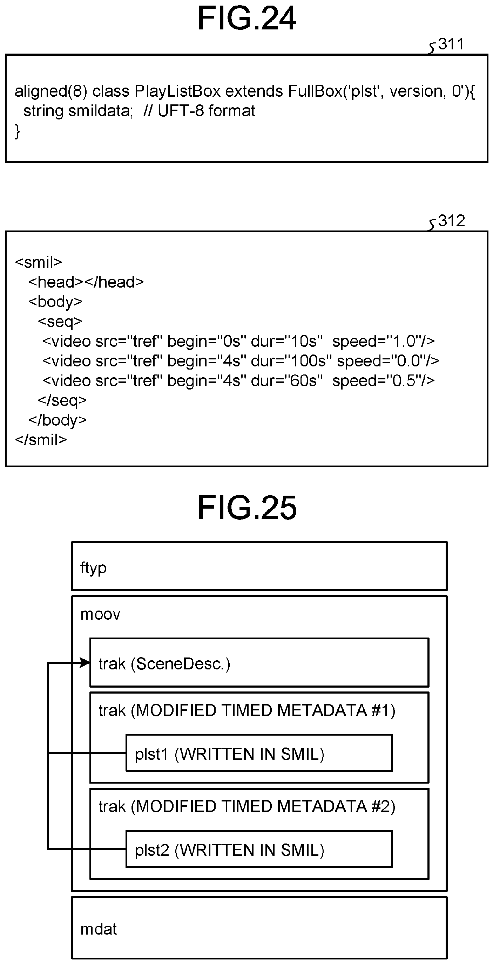

The metadata generation unit 122 generates a playlist represented using syntax 311 illustrated in FIG. 24. Then, the metadata generation unit 122 writes smil data represented using syntax 312 in PlayListBox. FIG. 24 is a diagram illustrating an example of the playlist according to Modification (1-4) of the second exemplary embodiment.

For the intended use, the scr attribute of Video element of SMIL specifies the name of a file to be played back, the URL of the file, and the like. Meanwhile, in the present embodiment, the control target of the playlist is a track and the track being the control target is associated with track reference. Therefore, the metadata generation unit 122 specifies, as the scr attribute of the Video element, tref or the like indicating the track reference, as shown in the syntax 312, and indicates media being the control target. In addition, the metadata generation unit 122 can specify, as the scr attribute of the Video element, trackID that is identification information of the track being the control target, thus indicating the media being the control target.

Furthermore, as shown in the syntax 312, the metadata generation unit 122 uses, as attributes for time control, begin that indicates the media time on the media timeline, dur that represents a playback time length, and speed that indicates the playback speed. Thus, the metadata generation unit 122 can provide information similar to the playlist having data written in the binary format, for the playlist written in SMIL.

Furthermore, the metadata generation unit 122 stores different sets of timed playback information in the playlists. Then, the metadata generation unit 122 sets storage destinations of the generated different playlists to the tracks that contain different sets of modified timed metadata. Furthermore, the metadata generation unit 122 sets the reference relationship between the track that stores each modified timed metadata and the track that stores the scene description.

FIG. 25 is a diagram illustrating an example of storing the playlists in an ISOBMFF file according to Modification (1-4) of the second embodiment. The file generation unit 124 stores the modified timed metadata corresponding to each playlist in the ISOBMFF file, according to the instruction from the metadata generation unit 122. Next, as illustrated in FIG. 21, in the ISOBMFF file, the file generation unit 124 stores the playlists described in SMIL, in boxes each associated with the modified timed metadata. Furthermore, the file generation unit 124 sets the reference relationship between each track that contains the modified timed metadata and the track that contains the scene description, by using tref such as reference_type ='rcvw'.

As described above, even when the playlist written in SMIL and including information equivalent to EditList is stored in the track that contains the modified timed metadata storing the recommended viewing information, a recommended playback method or viewing method can be provided.

### [2.2-1 Modification (2-1) of Second Embodiment]

Next, Modification (2-1) of the second embodiment will be described. The file generation device 1 according to the present exemplary embodiment stores both of the timed playback information and the recommended viewing information in modified temporal metadata. In the following, the modified temporal metadata that stores both of the timed playback information and the recommended viewing information will be referred to as mixed timed metadata.

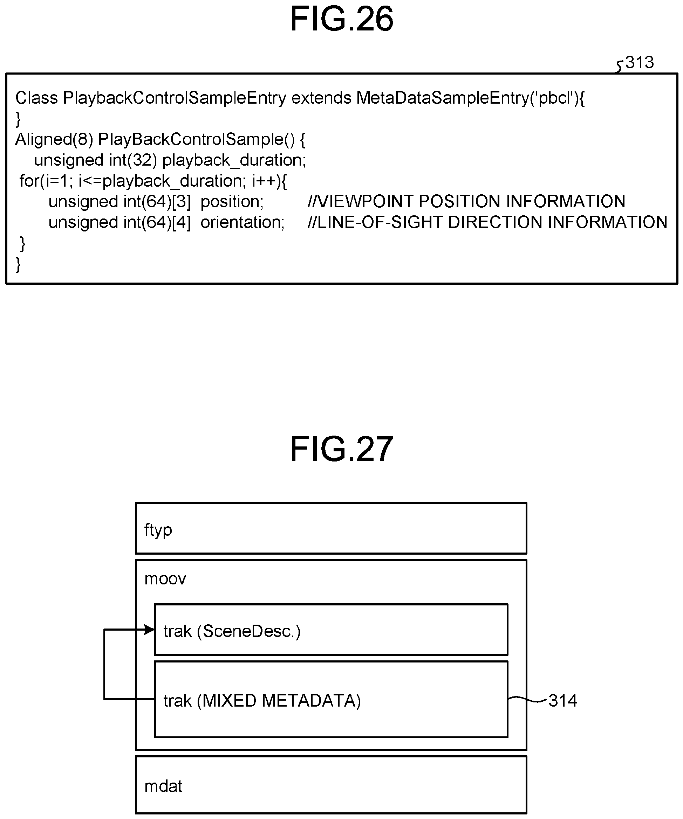

The metadata generation unit 122 generates the mixed timed metadata that has syntax 313 illustrated in FIG. 26 and includes the timed playback information and the recommended viewing information. FIG. 26 is a diagram illustrating an example of the mixed timed metadata according to Modification (2-1) of the second embodiment. In this configuration, the metadata generation unit 122 stores information that indicates, as PlayBack_Duration, the duration on the playback timeline of one sample in the media timeline, in each sample of the mixed timed metadata in the syntax 313. Use of this information allows the client device 2 to continue to play back the sample of the scene description for the duration, and pausing or slow-motion playback can be performed. Then, the metadata generation unit 122 sets the mixed timed metadata to be stored in a track different from the track containing the scene description. Furthermore, the metadata generation unit 122 sets the reference relationship between the track that stores each mixed timed metadata and the track that stores the scene description.

As illustrated in FIG. 27, in an ISOBMFF file, the file generation unit 124 stores the mixed timed metadata in a track 314 that is different from the track containing scene description according to an instruction from the metadata generation unit 122. FIG. 27 is a diagram illustrating an example of storing the mixed timed metadata in the ISOBMFF file according to Modification (2-1) of the second embodiment. In addition, the file generation unit 124 uses track reference or the like to associate the track 314 that contains the mixed timed metadata with the track that contains the scene description to be reproduced following the track 314. For example, the file generation unit 124 makes the association by using tref such as reference_type ='rcpl'.

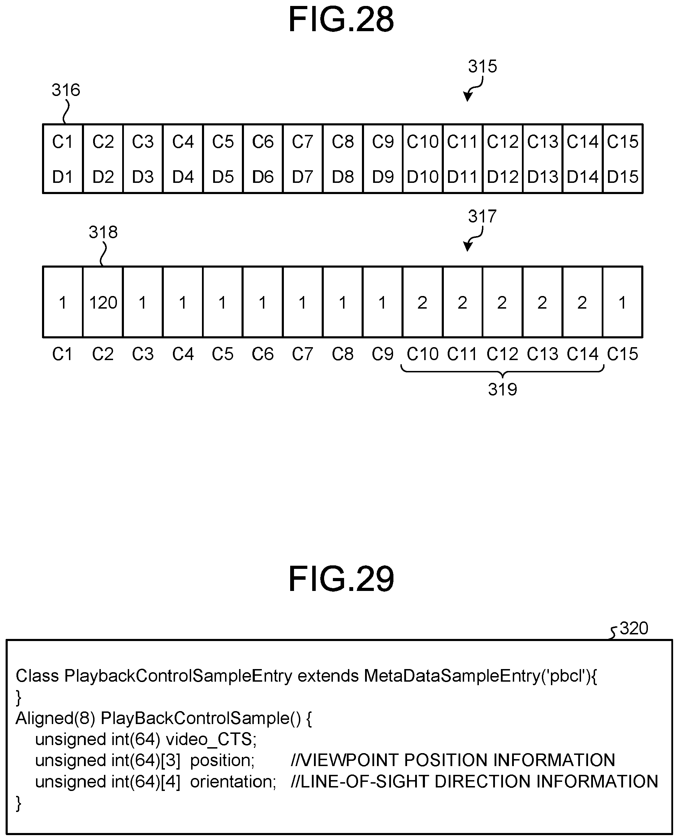

FIG. 28 is a diagram illustrating an outline of specifying the timed playback information by using the mixed timed metadata according to Modification (2-1) of the second embodiment. A scene description 315 is a playback target using the timed playback information, and has a plurality of samples 316. In FIG. 28, CTS and DTS of each sample are shown in each frame.

A mixed timed metadata 317 is metadata for assigning the timed playback information to the scene description 315, and has a plurality of samples. The mixed timed metadata 317 that specifies the timed playback information also has CTS and DTS. Then, numbers in the samples of the mixed timed metadata 317 each represents the duration of the corresponding sample 316. Then, sample 318 of the mixed timed metadata 317 is applied to sample 316 of the scene description 315 having the same CTS. In other words, in sample 318, sample 316 of the scene description 315 that has CTS represented by C2 is repeated 120 units. In other words, pausing is represented. Furthermore, sample 1 included in a group 319 in the mixed timed metadata is applied to samples having the same CTS in the scene description 315. In the group 319, each sample is played back two units, thus providing slow-motion playback at 1/2 speed. In addition, the recommended viewing information specified in each sample of the mixed timed metadata corresponding to each sample 318 being played back is applied.

As described above, the file generation device according to the present modification provides the timed playback information on the basis of the mixed temporal metadata storing the timed playback information and the recommended viewing information. Such a configuration can also provide a recommended playback method or viewing method.

### [2.2-2 Modification (2-2) of Second Embodiment]

Next, Modification (2-2) of the second embodiment will be described. In Modification (2-1) of the second embodiment described above, playback is performed in the order of CTS of samples in the original scene description, making loop playback and rewind playback to turn back the time difficult. Therefore, the file generation device 1 according to the present exemplary embodiment generates the mixed timed metadata to achieve the loop playback and the rewind playback to turn back the time.

The metadata generation unit 122 associates any sample in the original scene description with each sample 1 in the mixed timed metadata, and generates sample 1 of numerical mixed timed metadata equivalent to full recommended viewing/playback time. For example, the metadata generation unit 122 generates the mixed timed metadata having syntax 320 illustrated in FIG. 29. FIG. 29 is a diagram illustrating an example of the mixed timed metadata according to Modification (2-2) of the second embodiment. Specifically, the metadata generation unit 122 sets CTS of sample of the scene description that is to be associated with each sample of the mixed timed metadata. Furthermore, the metadata generation unit 122 stores data of recommended viewport information including the line-of-sight direction and the viewpoint position corresponding to each sample of the mixed timed metadata.

The file generation unit 124 generates a track containing the mixed timed metadata as illustrated in FIG. 27, in the ISOBMFF file in the same manner as in Modification (2-1) of the second embodiment. In addition, the file generation unit 124 uses track reference or the like to associate the track that contains the mixed timed metadata with the track that contains the scene description to be played back following the track. For example, the file generation unit 124 makes the association by using tref such as reference_type ='rcpl'.

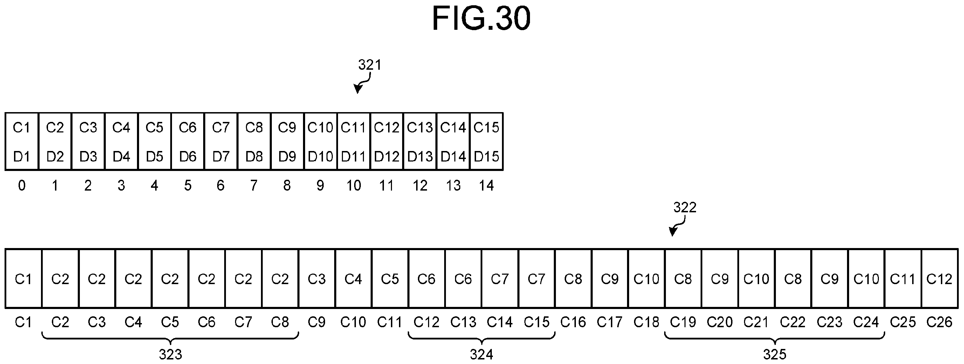

FIG. 30 is a diagram illustrating an outline of specifying the timed playback information by using the mixed timed metadata according to Modification (2-2) of the second embodiment. A scene description 321 is a playback target using the timed playback information, and has a plurality of samples. In FIG. 30, CTS and DTS of each sample are shown in each frame.

A mixed timed metadata 322 is metadata that assign the timed playback information to the scene description 321, and has a plurality of samples. The mixed timed metadata 322 that specifies the timed playback information also has CTS and DTS. Then, the numbers in the samples of the mixed timed metadata 322 each represents CTS of each sample of the corresponding scene description, and each number is applied to sample having the same CTS. In other words, in samples included in a group 323 of the mixed timed metadata 322, sample of the scene description 321 that has CTS represented by C2 is repeated. In other words, pausing is represented. In addition, in sample included in a group 324 of the mixed timed metadata 322, each of samples of the scene description 315 that have CTSs represented by C6 and C7 is played back twice. In other words, slow-motion playback at 1/2 speed is represented. In addition, in samples included in a group 325 of the mixed timed metadata 322, samples of the scene description 315 that have CTSs represented by C8 to C10 are repeated. In other words, loop playback is represented. In addition, in playback of each sample of the mixed timed metadata 322, the corresponding recommended viewing information is applied.

As described above, the file generation device according to the present modification specifies sample of the scene description, by using each sample of the mixed temporal metadata that stores the timed playback information and the recommended viewing information. This configuration makes it possible to provide a recommended playback method or viewing method including loop playback and rewind playback.

Here, a comparison is made for Modification (1-3) of the second embodiment, Modification (2-1) of the second embodiment, and Modification (2-2) of the second embodiment. According to Modification (1-3) of the second embodiment, in the playback method, signaling is collectively performed, facilitating changing on the production side. However, according to Modification (1-3) of the second embodiment, the recommended viewing control method is different between the playlist and the modified timed metadata, complicating time management by a client. Furthermore, according to Modification (2-1) of the second embodiment, the concept of the conventional timed metadata can be used without change. However, according to Modification (2-1) of the second embodiment, it is difficult to perform playback control to turn back the time. Furthermore, according to Modification (2-2) of the second embodiment, the timed playback method and the recommended viewing method are brought together, relatively facilitating the time management by the client. However, in Modification (2-2) of the second embodiment, since the playback method is sent in chronological order, making it difficult to acquire data to be used in advance or to acquire information to be held.

### [2.2-3 Modification (2-3) of Second Embodiment]

Next, Modification (2-3) of the second embodiment will be described. The file generation device 1 according to the present exemplary embodiment forms divided timed blocks each having the same playback method and stores the timed blocks in different sets of modified timed metadata. The file generation device 1 according to the present modification sets information of each entry_count to be sent as the modified timed metadata, at timing of using the information.

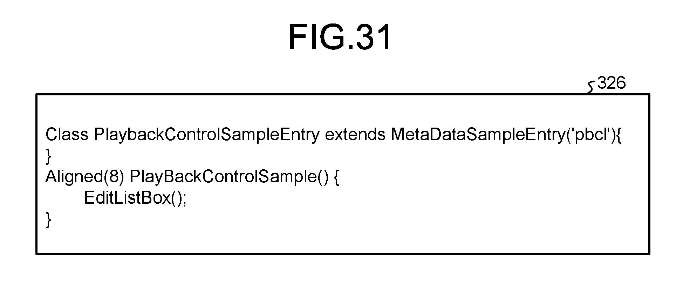

The metadata generation unit 122 generates the modified timed metadata that stores the timed playback information having syntax 326 as illustrated in FIG. 31. The modified timed metadata that stores the timed playback information according to the present exemplary embodiment is referred to as timed metadata for timed playback. FIG. 31 is a diagram illustrating an example of the timed metadata for timed playback according to Modification (2-3) of the second embodiment. In this case, EditList information for each entry_conut is stored in each sample of the timed metadata for timed playback.

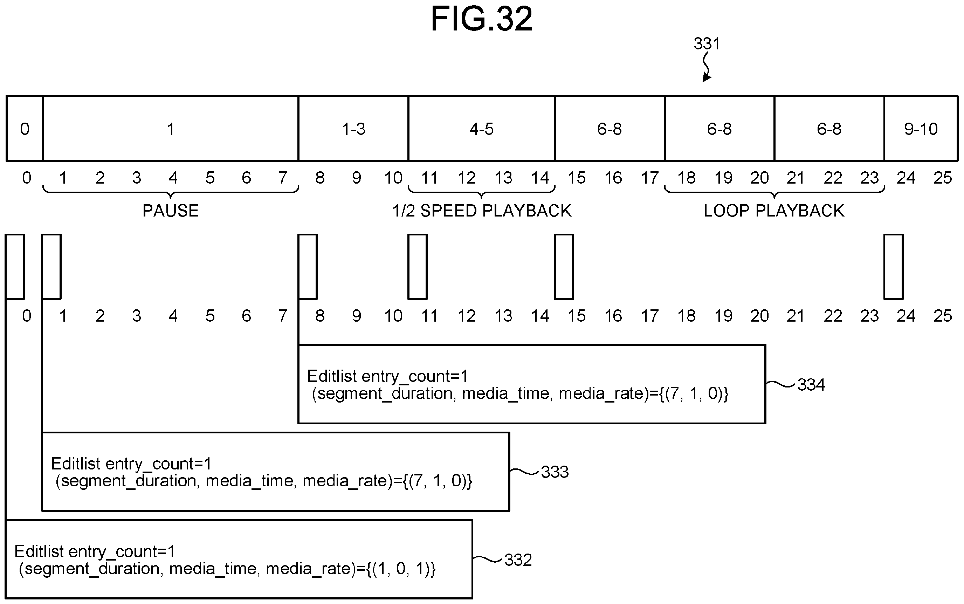

For example, FIG. 32 is a diagram illustrating an outline of specifying by using the timed metadata for timed playback according to Modification (6) of the second embodiment. The metadata generation unit 122 sets EditListBox() indicated by syntax 332 to 333 or the like to each sample of the timed metadata for timed playback. The metadata generation unit 122 specifies timing, a playback method, and a duration of playback of a unit playback data of the scene description, in EditListBox(). Therefore, the metadata generation unit 122 enables playback shown in playback data 331.

Furthermore, the metadata generation unit 122 generates the modified timed metadata for storing the recommended viewing information illustrated in FIG. 5, as in the first embodiment. The modified timed metadata storing the recommended viewing information according to the present exemplary embodiment is called recommended viewing timed metadata. Then, the metadata generation unit 122 separately sets a track that contains the timed metadata for timed playback and the track that contains the modified timed metadata.

Furthermore, the metadata generation unit 122 sets a track group that groups, as metadata, the track containing the timed metadata for timed playback and the track containing the modified timed metadata by using TrackGroupTypeBox(track_grouping_type='rcvw') or the like below TrackGroupBox. Therefore, the metadata generation unit 122 can combine the timed playback information and the recommended viewing information to form the modified timed metadata. Furthermore, the metadata generation unit 122 prepares a system indicating sample of the scene description referred to from the track group, for association of a set of the track that contains the timed metadata for timed playback and the track that contains the modified timed metadata, with sample of the scene description to which the set is applied. For example, the metadata generation unit 122 uses group_reference_type ='rcpl' or the like to set sample of the scene description that is to be referenced to from the track group so as to be indicated.

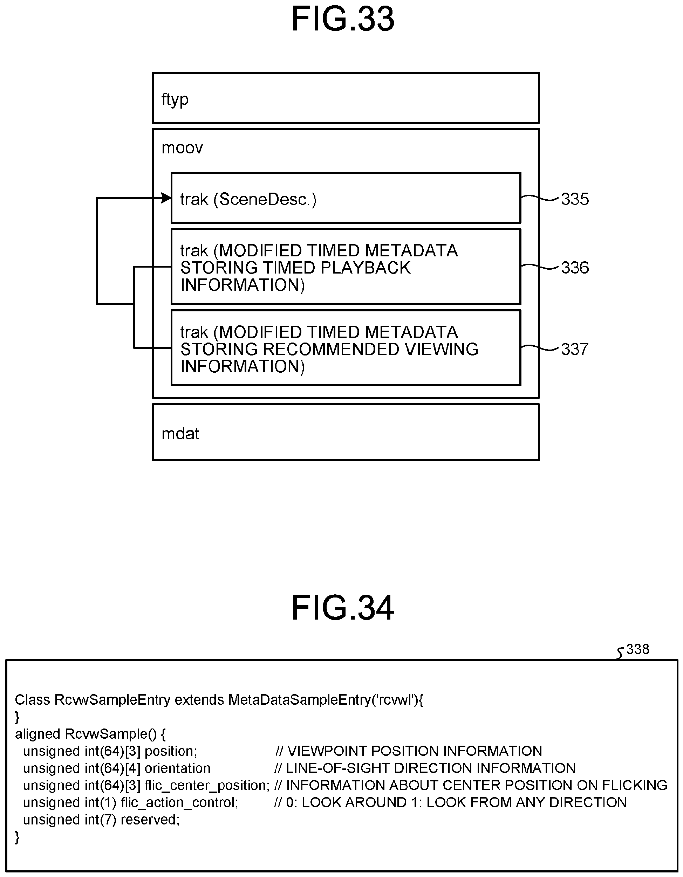

As illustrated in FIG. 33, the file generation unit 124 stores the timed metadata for timed playback in a track 336 that is different from the track containing the scene description of the ISOBMFF file, according to an instruction from the metadata generation unit 122. FIG. 33 is a diagram illustrating an example of storing the timed metadata for timed playback in the ISOBMFF file according to Modification (2-3) of the second embodiment. In addition, the file generation unit 124 stores the recommended viewing timed metadata in a track 337 that is different from that track containing the scene description of the ISOBMFF file. Then, the file generation unit 124 uses TrackGroupTypeBox(track_grouping_type='rcvw') below TrackGroupBox to form the track group. Furthermore, the file generation unit 124 uses track reference or the like to associate the track group with a scene description 335 to be played back following the track group. For example, the file generation unit 104 uses tref such as reference_type='rcel' for association.

Here, immediately before entry corresponding to each entry_count is reproduced, the track containing the timed metadata for timed playback and the track containing the modified timed metadata, of the entry, are sent from the web server 3 and acquired by the client device 2. The client device 2 reproduces the scene description according to the information of the timed metadata for timed playback and the information of the modified timed metadata. In other words, the client device 2 plays back the playback data 331 of FIG. 31 by reproducing the scene description using the timed metadata for timed playback and the modified timed metadata.

### [3. Third Embodiment]

The file generation device 1 according to the present embodiment further applies flick information indicating viewing experience upon flick motion, to the modified timed metadata associated with the playback unit data played back using the timed playback information.

For playing and viewing the 6DoF content on a 2D player such as a smartphone, behavior of looking around at a position and behavior of looking at the 3D model at that position from any direction can be considered, as the content of viewing achieved by screen flick. When the information is applied to specify appropriate behavior according to the content of the 6DoF content by the production side, viewing experience that the production side desires to show can be provided for the user.

For example, in a case where as the recommended viewport information, only a viewpoint is specified, the flick operation provides experience of looking around at the viewpoint in a certain time period, and experience of looking at the 3D model at that point from any direction in another time period, when the user who is interested in the viewpoint performs flick operation or the like on the screen for careful looking.

The metadata generation unit 122 according to the present embodiment generates the modified timed metadata having syntax 338 illustrated in FIG. 34. FIG. 34 is a diagram illustrating an example of the modified timed metadata according to a third embodiment. For example, the metadata generation unit 122 adds information about behavior generated by flicking to the modified timed metadata that stores the recommended viewing information. The information about behavior generated by flicking includes information about the center position of the flicking and information about the type of behavior.

For example, the metadata generation unit 122 sets the behavior generated by flicking, as the behavior of looking at the 3D model from any direction, when flic_action_flag is 1. Furthermore, the metadata generation unit 122 sets the behavior generated by flicking, as the behavior of looking around from the viewpoint position, when flic_action_flag is 0. Furthermore, depending on flic_center_position, the metadata generation unit 122 specifies information about the center point, for looking around by the flick action, or specifies information about the center point of the 3D model, for looking at the 3D model from any direction.

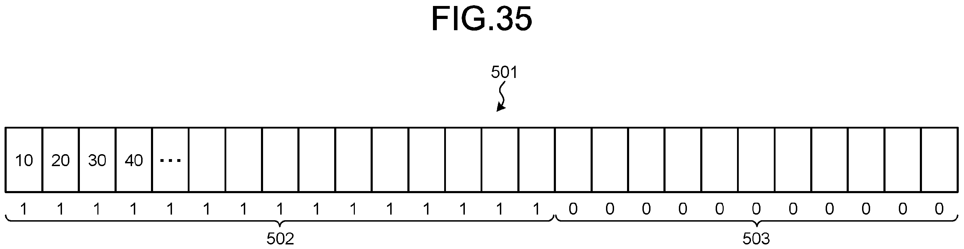

Therefore, for example, as illustrated in FIG. 35, the behavior corresponding to flicking is assigned to modified timed metadata 501. FIG. 35 is a diagram illustrating assignment of flick behavior to the modified timed metadata. The modified timed metadata 501 has a plurality of samples. Then, a number shown under the frame of each sample in FIG. 35 represents the value of flic_action_flag. In other words, while the timed metadata for a group 502 is applied, the behavior of looking at the 3D model from any direction is generated by flicking. Furthermore, while the timed metadata for a group 503 is applied, the behavior of looking around is generated by flicking.

As described above, the file generation device according to the present embodiment stores information about an action generated by the flick operation, in the modified timed metadata, and when the flick operation is performed in playback. the action is provided. This configuration makes it possible to provide a recommended operation at timing of flicking and provide an appropriate viewing experience according to the intention of the provider.

### [4. Fourth Embodiment]

When EditList, which is information for specifying the entire playback method, is stored, reference to EditList enables to acquire or store data in advance. For example, it is possible to save the data for rewind playback or acquire the data in advance for fast forward playback. In other words, the client device 2 is allowed to estimate whether which is data should be held, the data is acquired at what timing, and the data should be hold for how long, by using EditList Then, the acquisition and holding of the data according to the estimation makes it possible for the client device 2 to surely provide the 6DoF content by acquiring and holding the data according to the estimate.

However, understanding the contents of EditList, calculating the time to acquire the data, a time period for holding the data, and a place for storing the data put a load on the client device 2. Therefore, the file generation device 1 according to the present mobile phone stores prediction processing information together with EditList. The prediction processing information includes the time to acquire the data indicated by EditList, a time period for holding the data having been acquired, sample position representing data storage position information, and the like.

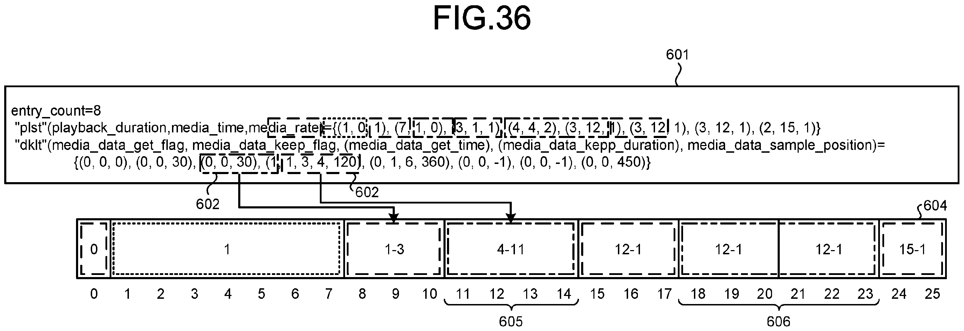

As shown in syntax 601 of FIG. 36, the metadata generation unit 122 generates the prediction processing information (media_data_get_time, media_data_keep_duration, media_sample_position) for entry specified in EditList and stores the prediction processing information in DataKeepListBox() or the like. FIG. 36 is a diagram illustrating an example of the syntax including the prediction processing information according to a fourth embodiment. For example, when the value of media_data_get_flag indicating that acquisition is performed in advance is 1, the metadata generation unit 122 stores the acquisition time as the prediction processing information. When media_data_keep_flag indicating holding the data is 1, the metadata generation unit 122 stores the holding period of the data as the prediction processing information. In addition, the metadata generation unit 122 also stores the position information about sample indicated by entry of EditList, as the prediction processing information. The position information about sample includes, for example, the number, byte address, and the like of sample. In other words, in FIG. 35, from setting information surrounded by frames indicated by various types of lines in the prediction processing information in FIG. 35, data of the scene description surrounded by a frame indicated by the same type of line in playback data 604 is acquired and held.

For example, a setting information 602 in the prediction processing information indicates that the setting information 602 is acquired at a time point of three seconds on the playback timeline and held for four seconds after acquisition. Therefore, the data used for playback of a group 605 in the playback data 604 is acquired and held. Furthermore, a setting information 603 in the prediction processing information indicates that the setting information 603 is held for six seconds just after a period specified by the previous setting information. Therefore, the data used for a group 606 in the playback data 604 is acquired and held.

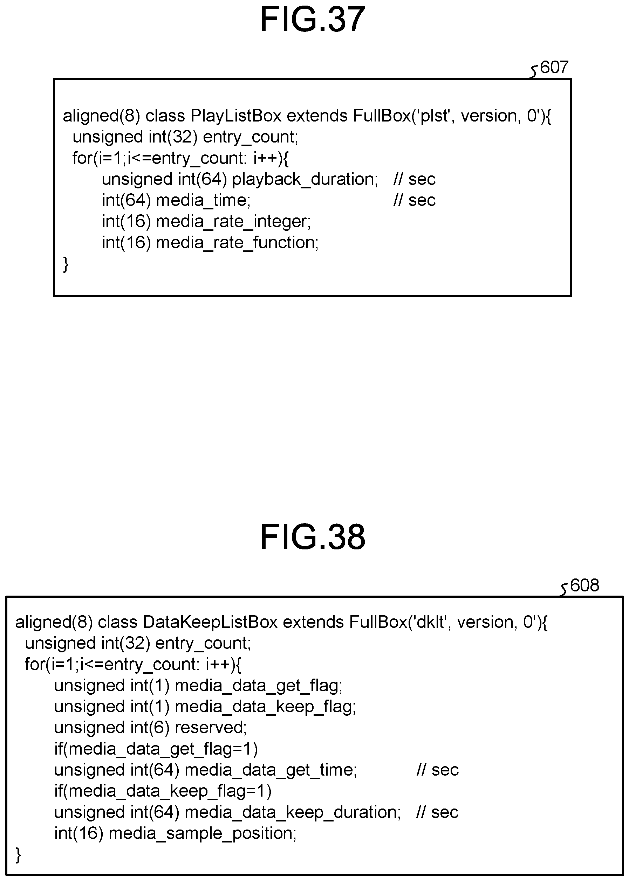

In this configuration, the metadata generation unit 122 generates the playlist represented in syntax 607 illustrated in FIG. 37. FIG. 37 is a diagram illustrating an example of the playlist according to the fourth embodiment. The metadata generation unit 122 registers the identification information and the playback duration of sample to be played back, in the playlist. Furthermore, the metadata generation unit 122 generates the prediction processing information represented in syntax 608 illustrated in FIG. 38. FIG. 38 is a diagram illustrating an example of the prediction processing information according to the fourth embodiment. The metadata generation unit 122 registers information about the data to be acquired in advance and information about the time period for holding the data, in the prediction processing information.

As described above, the file generation device according to the present exemplary embodiment provides the prediction processing information including the time to acquire data to be played back, the time period for holding the data having been acquired, and the data storage position information, to the client device, together with EditList. Therefore, the client device is allowed to acquire and store data in advance with a low load, reliably providing the 6DoF content.

### [5. Fifth Embodiment]

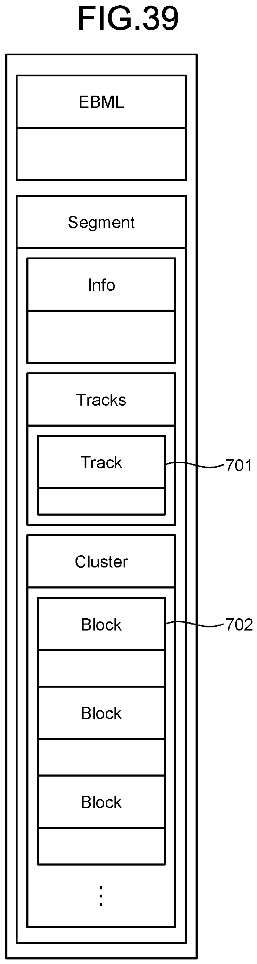

In the above embodiments, storage of the scene description in the ISOBMFF format has been described, but other formats may be used for the file format. The file generation device 1 according to the present embodiment stores the scene description, the timed playback information, and the recommended viewport information, in a Matroska format file illustrated in FIG. 39. FIG. 39 is a diagram illustrating an example of the Matroska format.

In this case, the file generation unit 124 stores common information about the modified timed metadata, in track entry element of trak element 701, and stores samples of the actual modified timed metadata, in Block element 602 in Cluster. Furthermore, in storage of EditList, the file generation unit 124 stores a meta box containing EditList, in Track entry element of trak element 701 that stores the timed metadata.

### [6. Sixth Embodiment]

It is also possible to store information stored in ISOBMFF, in MPD of DASH, in the first to fourth embodiments. The timed playback information, the recommended viewport information, and the scene description are written in one MPD, each of which clearly shows AdaptationSet and the reference relationship.

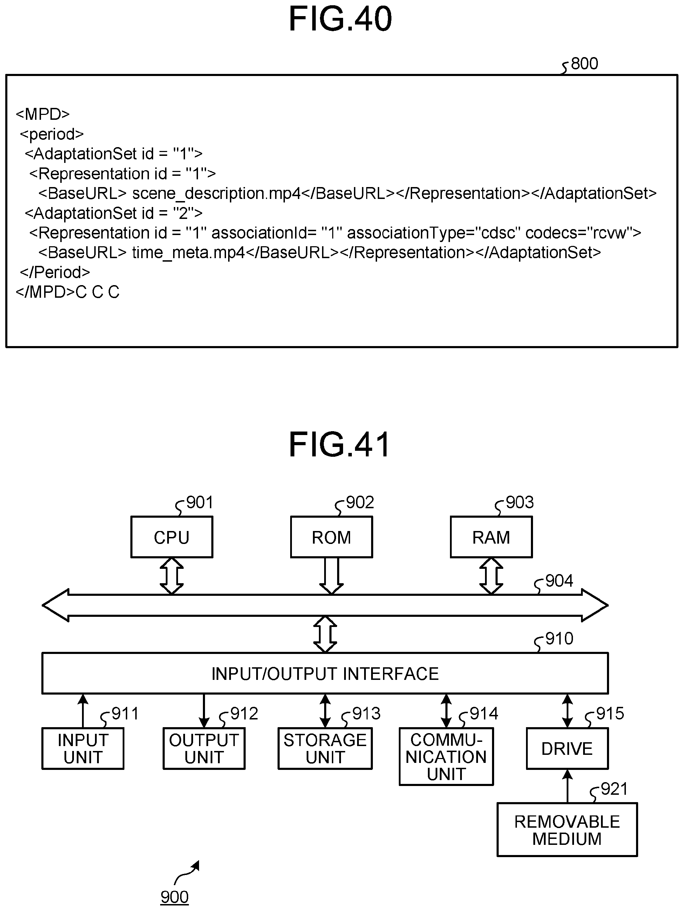

For example, in storing meta box containing elst in a trak box containing the recommended viewport information, the file generation unit 124 generates Representation of the AdaptationSet containing the timed playback information and the recommended viewport information, as shown in syntax 800 illustrated in FIG. 40. FIG. 40 is a diagram illustrating a description example of a DASH MPD file according to a sixth embodiment. This configuration makes it possible to specify associationID/type/codeces or the like that indicates a reference to the scene description, the type of the data, or the like.

In the above embodiments, an example of the scene description of the 6DoF content has been described, as a target to which the timed playback information and the recommended viewport information are applied, but the target to which the timed playback information and the recommended viewport information are applied may be "3DoF+" content.

### (Hardware configuration)

A series of the processing described above can be executed by hardware or software. In a case where the series of processing is executed by the software, programs constituting the software is installed on a computer.

Here, examples of the computer include a computer that is incorporated in dedicated hardware, a general-purpose computer that is configured to execute various functions by installing various programs, and the like.

FIG. 41 is a hardware configuration diagram of the file generation device. The file generation device 1 is implemented by a computer 900 illustrated in FIG. 41. In the computer 900, a central processing unit (CPU) 901, a read only memory (ROM) 902, and a random access memory (RAM) 903 are connected to each other via a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, optical disk, magneto-optical disk, or semiconductor memory.

In the computer configured as described above, the CPU 901 loads a program stored in the storage unit 913 into the RAM 903 via the input/output interface 910 and the bus 904, and executes a series of processing described above. The RAM 903 also appropriately stores data necessary to execute various processing by the CPU 901.

For example, the program executed by the CPU 901 can be applied by being recorded in the removable medium 921 as a package media or the like. In this configuration, the program can be installed in the storage unit 913 via the input/output interface 910 by mounting the removable medium 921 to the drive 915.

Furthermore, the program can also be provided via a wired or wireless transmission medium such as local area network, the Internet, and digital satellite broadcast. In this configuration, the program is allowed to be received by the communication unit 914 and installed in the storage unit 913.

In addition, the program is allowed to be installed in ROM 902 or the storage unit 913 in advance.

The embodiments of the present disclosure have been described above, but the technical scope of the present disclosure is not limited to the embodiments described above, and various modifications and alterations can be made without departing from the spirit and scope of the present disclosure. Moreover, the components of different embodiments and modifications may be suitably combined with each other.

Furthermore, the effects described herein are merely examples, the present invention is not limited to these effects, and other effects may also be provided.

Note that the present technology can also employ the following configurations.
(1) An information processing device comprising a metadata generation unit that generates timed playback information indicating a display order along time passage for playback of each scene of 6DoF content including a three-dimensional model in a three-dimensional space, and modified timed metadata including recommended viewing information indicating a viewpoint position and a line-of-sight direction corresponding to each time point along time passage for playback, and generates association information indicating that the timed playback information and the modified timed metadata correspond to each time point along the time passage for playback.
(2) The information processing device according to (1), wherein the metadata generation unit stores identification information of the timed playback information corresponding to the recommended viewing information, in the modified timed metadata, and generates the association information.
(3) The information processing device according to (2), in which the metadata generation unit generates other timed playback information that is different from the timed playback information, and other modified timed metadata that includes other recommended viewing information different from the recommended viewing information, causes the timed playback information and the other timed playback information to be stored in different tracks, stores identification information of the timed playback information in the modified timed metadata, stores identification information of the other timed playback information in the other modified timed metadata, and makes an association.
(4) The information processing device according to (1), wherein the metadata generation unit stores the timed playback information in a track storing the modified timed metadata and generates the association information.
(5) The information processing device according to (1), wherein the metadata generation unit stores, in the modified timed metadata, the timed playback information at each time point of the each scene, thereby generates mixed timed metadata including the recommended viewing information and information of the timed playback information, and associates the mixed timed metadata with each of the scenes by using each time point of the scene.
(6) The information processing device according to (1), wherein the metadata generation unit stores the timed playback information at each time point along the time passage for playback, in the modified timed metadata, thereby generates mixed timed metadata that includes the recommended viewing information and information of the timed playback information, and associates the time passage for playback of the mixed timed metadata with data at each time point and the each scene.
(7) The information processing device according to (1), wherein the metadata generation unit has the timed playback information at each time point in time passage for playback, generates timed metadata for timed playback that stores information of the timed playback information, and associates the timed metadata for timed playback with the modified timed metadata.
(8) The information processing device according to any one of (1) to (7), wherein
   the metadata generation unit generates predetermined operation information that makes a predetermined change to a viewpoint position or a line-of-sight direction upon receiving predetermined operation in playback of the 6DoF content, and further includes a file generation unit that generates a file including data of the 6DoF content, the timed playback information, the modified timed metadata, the association information, and the predetermined operation information.
(9) The information processing device according to any one of (1) to (8), wherein
   the metadata generation unit generates acquisition control information that includes acquisition timing and a holding time period of data of the each scene, based on the timed playback information, and
   further includes a file generation unit that generates a file including data of the 6DoF content, the timed playback information, the modified timed metadata, the association information, and the acquisition control information.
(10) An information processing device comprising a metadata generation unit that defines and generates a playlist containing timed playback information indicating a display order along time passage for playback of each scene of 6DoF content including a three-dimensional model in a three-dimensional space, generates modified timed metadata including recommended viewing information indicating a viewpoint position and a line-of-sight direction corresponding to each time point along time passage for playback, and generates association information indicating that the playlist and the modified timed metadata correspond to each time point along the time passage for playback.
(11) The information processing device according to (10), wherein the metadata generation unit stores identification information of the playlist corresponding to the recommended viewing information, in the modified timed metadata, and generates the association information.
(12) The information processing device according to (11), wherein the metadata generation unit generates another playlist that includes other timed playback information different from the timed playback information, and other modified timed metadata that includes other recommended viewing information different from the recommended viewing information, causes the playlist and the another playlist to be stored in different tracks, stores identification information of the playlist in the modified timed metadata, stores identification information of the another playlist in the other modified timed metadata, and makes an association.
(13) The information processing device according to (10), wherein the metadata generation unit stores the playlist in a track storing the modified timed metadata and generates the association information.
(14) The information processing device according to (10), in which the metadata generation unit stores, in the modified timed metadata, the timed playback information at each time point of the each scene, thereby generates mixed timed metadata including the recommended viewing information and information of the playlist, and associates the mixed timed metadata with each of the scenes by using each time point of the scene.
(15) The information processing device according to (10), in which the metadata generation unit stores the timed playback information at each time point along the time passage for playback, in the modified timed metadata, thereby generates mixed timed metadata that includes the recommended viewing information and information of the playlist, and associates the time passage for playback of the mixed metadata with data at each time point and the each scene.
(16) The information processing device according to (10), in which the metadata generation unit has the timed playback information at each time point in time passage for playback, generates timed metadata for timed playback that stores information of the playlist, and associates the timed metadata for timed playback with the modified timed metadata.
(17) The information processing device according to any one of (10) to (16), wherein the metadata generation unit writes the playlist in synchronized multimedia integration language (SMIL).
(18) The information processing device according to any one of (10) to (17), wherein
   the metadata generation unit
   generates predetermined operation information that makes a predetermined change to a viewpoint position or a line-of-sight direction upon receiving predetermined operation in playback of the 6DoF content, and
   further includes a file generation unit that generates a file including data of the 6DoF content, the timed playback information, the modified timed metadata, the association information, and the predetermined operation information.
(19) The information processing device according to any one of (10) to (18), wherein
   the metadata generation unit generates acquisition control information that includes acquisition timing and a holding time period of data of the each scene, based on the timed playback information, and
   further includes a file generation unit that generates a file including data of the 6DoF content, the timed playback information, the modified timed metadata, the association information, and the acquisition control information.
(20) An information processing device comprising:
   a metadata generation unit that stores, in MPD, timed playback information indicating a display order along time passage for playback of each scene of 6DoF content including a three-dimensional model in a three-dimensional space, and recommended viewing information indicating a change in viewpoint position and line-of-sight direction at each time point of the time passage for playback; and
   a file generation unit that generates a file containing the MPD in which data of the 6DoF content, the timed playback information, and the recommended viewing information are stored.
(21) An information processing method causing a computer to perform processes comprising:
   generating timed playback information indicating a display order along time passage for playback of each scene of 6DoF content including a three-dimensional model in a three-dimensional space, and modified timed metadata including recommended viewing information indicating a viewpoint position and a line-of-sight direction corresponding to each time point along time passage for playback; and
   generating association information indicating that the timed playback information and the modified timed metadata correspond to each time point along the time passage for playback.
(22) An information processing method causing a computer to perform processes including:
   defining and generating a playlist that contains timed playback information indicating a display order along time passage for playback of each scene of 6DoF content including a three-dimensional model in a three-dimensional space;
   generating modified timed metadata that includes recommended viewing information indicating a change in viewpoint position and line-of-sight direction at each time point along the time passage for playback;
   generating correspondence information that associates the playlist with the modified timed metadata; and
   generating a file that contains the playlist, the modified timed metadata, the correspondence information, and data of the 6DoF content.
(23) A playback processing device including:
   a media data acquisition unit that acquires data of 6DoF content including a three-dimensional model in a three-dimensional space;
   a metadata acquisition unit that acquires a file including first timed playback information indicating a display order along time passage for playback of each scene of the 6DoF content, modified timed metadata including recommended viewing information indicating a viewpoint position and a line-of-sight direction corresponding to each time point along the time passage for playback, and association information indicating that the timed playback information and the modified timed metadata correspond to each time point along the time passage for playback;
   a display information generation unit that generates display image of the 6DoF content at each time point along the time passage for playback, in the display order specified in the timed playback information, based on the recommended viewing information included in the modified timed metadata; and
   a display unit that displays the display image generated by the display information generation unit along time passage for playback.
(24) A playback processing device including:
   a media data acquisition unit that acquires data of 6DoF content including a three-dimensional model in a three-dimensional space;
   a metadata acquisition unit that acquires a file including a playlist containing timed playback information indicating a display order along time passage for playback of each scene of the 6DoF content, modified timed metadata including recommended viewing information indicating a viewpoint position and a line-of-sight direction at each time point of the time passage for playback, and association information indicating that the playlist and the modified timed metadata correspond to each time point of the time passage for playback;
   a display information generation unit that generates display image of the 6DoF content at each time point along the time passage for playback, in the display order specified in the timed playback information included in the playlist, based on the recommended viewing information included in the modified timed metadata; and
   a display unit that displays the display image generated by the display information generation unit along time passage for playback.
(25) A playback processing method causing a computer to perform processes including:
   acquiring data of 6DoF content including a three-dimensional model in a three-dimensional space;
   acquiring a file including first timed playback information indicating a display order along time passage for playback of each scene of the 6DoF content, modified timed metadata including recommended viewing information indicating a viewpoint position and a line-of-sight direction corresponding to each time point of the time passage for playback, and association information indicating that the timed playback information and the modified timed metadata correspond to each time point of the time passage for playback;
   generating display image of the 6DoF content at each time point along the time passage for playback, in the display order specified in the timed playback information included in the timed playback information, based on the recommended viewing information included in the modified timed metadata; and
   displaying the display image generated by the display information generation unit along time passage for playback.
(26) A playback processing device causing a computer to perform processes including:
   acquiring data of 6DoF content including a three-dimensional model in a three-dimensional space;
   acquiring a file including a playlist including timed playback information indicating a display order along time passage for playback of each scene of the 6DoF content, modified timed metadata including recommended viewing information indicating a viewpoint position and a line-of-sight direction corresponding to each time point of the time passage for playback, and association information indicating that the playlist and the modified timed metadata correspond to each time point of the time passage for playback;
   generating display image of the 6DoF content at each time point along the time passage for playback, in the display order specified in the timed playback information included in the playlist, based on the recommended viewing information included in the modified timed metadata; and
   displaying the display image generated by the display information generation unit along time passage for playback.

### Reference Signs List

- 1: FILE GENERATION DEVICE
- 2: CLIENT DEVICE
- 3: Web SERVER
- 4: NETWORK
- 11: DATA INPUT UNIT
- 12: FILE GENERATION PROCESSING UNIT
- 13: TRANSMISSION UNIT
- 14: CONTROL UNIT
- 21: PLAYBACK PROCESSING UNIT
- 22: DISPLAY UNIT
- 23: CONTROL UNIT
- 121: PREPROCESSING UNIT
- 122: METADATA GENERATION UNIT
- 123: ENCODING UNIT
- 124: FILE GENERATION UNIT
- 211: MEDIA DATA ACQUISITION UNIT
- 212: METADATA ACQUISITION UNIT
- 213: DECODING PROCESSING UNIT
- 214: MEDIA DATA ACQUISITION CONTROL UNIT
- 215: BUFFER
- 216: DISPLAY CONTROL UNIT
- 217: DISPLAY INFORMATION GENERATION UNIT

## Claims

1. An information processing device comprising a metadata generation unit that generates timed playback information indicating a display order along time passage for playback of each scene of 6DoF content including a three-dimensional model in a three-dimensional space, and modified timed metadata including recommended viewing information indicating a viewpoint position and a line-of-sight direction corresponding to each time point along time passage for playback, and generates association information indicating that the timed playback information and the modified timed metadata correspond to each time point along the time passage for playback.

2. The information processing device according to claim 1, wherein the metadata generation unit stores identification information of the timed playback information corresponding to the recommended viewing information, in the modified timed metadata, and generates the association information.

3. The information processing device according to claim 2, wherein the metadata generation unit generates other timed playback information that is different from the timed playback information, and other modified timed metadata that includes other recommended viewing information different from the recommended viewing information, stores identification information of the timed playback information in the modified timed metadata, stores identification information of the other timed playback information in the other modified timed metadata, and makes an association.

4. The information processing device according to claim 1, wherein the metadata generation unit stores the timed playback information in a track storing the modified timed metadata and generates the association information.

5. The information processing device according to claim 1, wherein the metadata generation unit stores, in the modified timed metadata, the timed playback information at each time point of the each scene, thereby generates mixed timed metadata including the recommended viewing information and information of the timed playback information, and associates the mixed timed metadata with each of the scenes by using each time point of the scene.

6. The information processing device according to claim 1, wherein
the metadata generation unit stores the timed playback information at each time point along the time passage for playback, in the modified timed metadata, thereby generates mixed timed metadata that includes the recommended viewing information and information of the timed playback information, and associates the time passage for playback of the mixed timed metadata with data at each time point and the each scene.

7. The information processing device according to claim 1, wherein the metadata generation unit has the timed playback information at each time point in time passage for playback, generates timed metadata for timed playback that stores information of the timed playback information, and associates the timed metadata for timed playback with the modified timed metadata.

8. The information processing device according to claim 1, wherein
the metadata generation unit
generates predetermined operation information that makes a predetermined change to a viewpoint position or a line-of-sight direction upon receiving predetermined operation in playback of the 6DoF content, and
further includes a file generation unit that generates a file including data of the 6DoF content, the timed playback information, the modified timed metadata, the association information, and the predetermined operation information.

9. The information processing device according to claim 1, wherein
the metadata generation unit generates acquisition control information that includes acquisition timing and a holding time period of data of the each scene, based on the timed playback information, and
further includes a file generation unit that generates a file including data of the 6DoF content, the timed playback information, the modified timed metadata, the association information, and the acquisition control information.

10. An information processing device comprising a metadata generation unit that defines and generates a playlist containing timed playback information indicating a display order along time passage for playback of each scene of 6DoF content including a three-dimensional model in a three-dimensional space, generates modified timed metadata including recommended viewing information indicating a viewpoint position and a line-of-sight direction corresponding to each time point along time passage for playback, and generates association information indicating that the playlist and the modified timed metadata correspond to each time point along the time passage for playback.

11. The information processing device according to claim 10, wherein the metadata generation unit stores identification information of the playlist corresponding to the recommended viewing information, in the modified timed metadata, and generates the association information.

12. The information processing device according to claim 11, wherein the metadata generation unit generates another playlist that includes other timed playback information different from the timed playback information, and other modified timed metadata that includes other recommended viewing information different from the recommended viewing information, causes the playlist and the another playlist to be stored in different tracks, stores identification information of the playlist in the modified timed metadata, stores identification information of the another playlist in the other modified timed metadata, and makes an association.

13. The information processing device according to claim 10, wherein the metadata generation unit stores the playlist in a track storing the modified timed metadata and generates the association information.

14. The information processing device according to claim 10, wherein the metadata generation unit writes the playlist in synchronized multimedia integration language (SMIL) .

15. The information processing device according to claim 10, wherein
the metadata generation unit
generates predetermined operation information that makes a predetermined change to a viewpoint position or a line-of-sight direction upon receiving predetermined operation in playback of the 6DoF content, and
further includes a file generation unit that generates a file including data of the 6DoF content, the timed playback information, the modified timed metadata, the association information, and the predetermined operation information.

16. The information processing device according to claim 10, wherein
the metadata generation unit generates acquisition control information that includes acquisition timing and a holding time period of data of the each scene, based on the timed playback information, and
further includes a file generation unit that generates a file including data of the 6DoF content, the timed playback information, the modified timed metadata, the association information, and the acquisition control information.

17. An information processing device comprising:
a metadata generation unit that stores, in MPD, timed playback information indicating a display order along time passage for playback of each scene of 6DoF content including a three-dimensional model in a three-dimensional space, and recommended viewing information indicating a change in viewpoint position and line-of-sight direction at each time point of the time passage for playback; and
a file generation unit that generates a file containing the MPD in which data of the 6DoF content, the timed playback information, and the recommended viewing information are stored.

18. An information processing method causing a computer to perform processes comprising:
generating timed playback information indicating a display order along time passage for playback of each scene of 6DoF content including a three-dimensional model in a three-dimensional space, and modified timed metadata including recommended viewing information indicating a viewpoint position and a line-of-sight direction corresponding to each time point along time passage for playback; and
generating association information indicating that the timed playback information and the modified timed metadata correspond to each time point along the time passage for playback.

19. An information processing method causing a computer to perform processes comprising:
defining and generating a playlist containing timed playback information indicating a display order along time passage for playback of each scene of 6DoF content including a three-dimensional model in a three-dimensional space;
generating modified timed metadata including recommended viewing information indicating a viewpoint position and a line-of-sight direction corresponding to each time point along time passage for playback; and
generating association information indicating that the playlist and the modified timed metadata correspond to each time point along the time passage for playback.
